(19) Europäisches Patentamt
European Patent Office
Office européen des brevets

(11) EP 3 347 435 B1

(12) **EUROPEAN PATENT SPECIFICATION**

(45) Date of publication and mention of the grant of the patent:
**15.04.2020 Bulletin 2020/16**

(21) Application number: **16750622.9**

(22) Date of filing: **10.08.2016**

(51) Int Cl.:
***C09K 19/58*** *(2006.01)* ***C09K 19/52*** *(2006.01)*
***C09K 19/30*** *(2006.01)* ***C09K 19/04*** *(2006.01)*
***C09K 19/12*** *(2006.01)* ***C09K 19/18*** *(2006.01)*

(86) International application number:
**PCT/EP2016/001375**

(87) International publication number:
**WO 2017/041872 (16.03.2017 Gazette 2017/11)**

(54) **PRIVACY WINDOW**

PRIVATSPHÄREFENSTER

FENÊTRE D'INTIMITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.09.2015 EP 15002628**

(43) Date of publication of application:
**18.07.2018 Bulletin 2018/29**

(73) Proprietor: **Merck Patent GmbH**
**64293 Darmstadt (DE)**

(72) Inventors:
- **CHEN, Kuan-Yu**
  **Zhongli 320 (TW)**
- **GRACIA, Eduardo Beltran**
  **Southampton SO15 5FD (GB)**

(56) References cited:
**EP-A1- 2 840 437** **EP-A1- 2 902 843**
**WO-A1-2014/169984** **US-A- 5 621 552**

- **Yu-Cheng Hsiao ET AL: "Fast-switching bistable cholesteric intensity modulator References and links", Appl. Phys. Lett. Appl. Phys. Lett. Opt. Express Appl. Phys. Express J. Appl. Phys. Appl. Phys. Lett. Opt. Express Appl. Phys. Lett. Appl. Phys. Lett. J. Appl. Phys, 4 May 2011 (2011-05-04), pages 269-271, XP055314712, Retrieved from the Internet: URL:https://www.osapublishing.org/DirectPDFAccess/626B15C5-9E5E-506F-661BBA31B036994 A_213629/oe-19-10-9744.pdf?da=1&id=213629&seq=0&mobile=no [retrieved on 2016-10-27] cited in the application**
- **JI MA ET AL: "Bistable Polymer Stabilized Cholesteric Texture Light Shutter", APPLIED PHYSICS EXPRESS, vol. 3, no. 2, 12 February 2010 (2010-02-12), page 021702, XP055314711, JP ISSN: 1882-0778, DOI: 10.1143/APEX.3.021702 cited in the application**
- **"Dual frequency cholesteric light shutters", APPLIED PHYSICS LETTERS, A I P PUBLISHING LLC, US, vol. 70, no. 6, 10 February 1997 (1997-02-10), page 720, XP012018313, ISSN: 0003-6951, DOI: 10.1063/1.118261 cited in the application**
- **CHENGLIANG YANG ET AL: "Ultrafast switchable wide angle negative refraction in novel dual-frequency liquid crystal mixture", LIQUID CRYSTALS, TAYLOR & FRANCIS, vol. 40, no. 10, 1 October 2013 (2013-10-01), pages 1316-1321, XP001585456, ISSN: 0267-8292, DOI: 10.1080/02678292.2013.815283 [retrieved on 2013-07-02]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 347 435 B1

## Description

The present invention relates to a privacy window comprising a light modulation element comprising a pair of opposing transparent substrates, which are provided with an electrode structure on the inner surface of each substrate and a switching layer comprising a cholesteric liquid crystalline medium comprising one or more polymer particles in an amount of 0.1% by weight to 5% by weight and one or more chiral compounds, wherein the one or more chiral compounds each alone or in combination with each other have an absolute value of the helical twisting power $IHTP_{total}$ of 5 $\mu m^{-1}$ or more, wherein the refractive index of the polymer particles differs from the refractive index of the cholesteric liquid crystalline medium in a range from -0.25 to +0.25, wherein the cholesteric liquid crystalline medium is a dual frequency cholesteric liquid crystalline medium, and wherein the cholesteric liquid crystalline medium comprises one or more compounds of formulae B-I, optionally one or more compounds of formula B-II, and one or more compounds of formula B-III.

The invention further relates to a method of production of a privacy window as described above and below.

Liquid-crystal displays are known from prior art. The commonest display devices are based on the Schadt-Helfrich effect and contain a liquid-crystal medium having a twisted nematic structure, such as, for example, TN ("twisted nematic") cells having twist angles of typically 90° and STN ("super-twisted nematic") cells having twist angles of typically from 180 to 270°. The twisted structure in these displays is usually achieved by addition of one or more chiral dopants to a nematic or smectic liquid-crystal medium.

Also known are liquid-crystal displays, which contain liquid crystal (LC) media having a chiral nematic or cholesteric structure. These media have significantly higher twist compared with the media from TN and STN cells. Cholesteric liquid crystals exhibit selective reflection of circular-polarised light, with the direction of rotation of the light vector corresponding to the direction of rotation of the cholesteric helix. The reflection wavelength $\lambda$ is given by the pitch p of the cholesteric helix and the mean birefringence n of the cholesteric liquid crystal in accordance with:

$$\lambda_{max} = n \cdot p$$

Where, $\lambda_{max}$ is the wavelength of selective reflection maximum, and n is the mean refraction index ($n_{mean}$= $[(n_o+n_e)]/2$), pitch (p) is the distance for the orientational axis (director) of the CLC phase to undergo a $2\pi$ rotation.

Examples of customary cholesteric liquid crystal (CLC) displays are the so-called SSCT ("surface stabilised cholesteric texture") and PSCT ("polymer stabilised cholesteric texture") displays. The helical structure with controlled pitch of cholesteric liquid crystal (CLC) in CLC and their composites makes them extremely promising for uses in polarizer free electro optic devices, such as electrically switchable privacy windows, light shutters.

A CLC medium for the above-mentioned displays can be prepared, for example, by doping a nematic LC medium with a chiral dopant having a high twisting power. The pitch p of the induced cholesteric helix is then given by the concentration c and the helical twisting power HTP of the chiral dopant in accordance with the following equation:

$$p = (HTP\ c)^{-1}$$

It is also possible to use two or more dopants, for example in order to compensate for the temperature dependence of the HTP of the individual dopants and thus to achieve low temperature dependence of the helix pitch and the reflection wavelength of the CLC medium. For the total HTP ($HTP_{total}$) holds then approximately:

$$HTP_{total} = \sum_i c_i HTP_i$$

wherein $c_i$ is the concentration of each individual dopant and $HTP_i$ is the helical twisting power of each individual dopant.

For use in the above-mentioned applications, the chiral dopants should have the highest possible helical twisting power and low temperature dependence, high stability and good solubility in the liquid-crystalline host phase. In addition, they should have as little adverse effect as possible on the liquid-crystalline and electro-optical properties of the liquid-crystalline host phase. A high helical twisting power of the dopants is desired, inter alia for achieving small pitches, for example in cholesteric displays, but also in order to be able to reduce the concentration of the dopant. This firstly achieves a reduction in potential impairment of the properties of the liquid-crystal medium by the dopant and secondly increases the latitude regarding the solubility of the dopant, also enabling, for example, dopants of relatively low solubility to be used.

In general, CLC materials for use in the above-mentioned displays must have good chemical and thermal stability and good stability to electric fields and electromagnetic radiation. Furthermore, the liquid-crystal materials should have a broad cholesteric liquid-crystal phase having a high clearing point, sufficiently high birefringence, high positive

dielectric anisotropy and low rotational viscosity.

When the texture of the CLC is switched to the focal conic texture, the Bragg reflection disappears and CLC scatters the incident light due to the helical axes being randomly distributed.

In the CLC composite systems a small amount of monomer is dispersed in the CLC and polymerized in the liquid crystal phase to form anisotropic polymer networks and the polymer network has an aligning effect on the LC, which tends to keep the liquid crystal parallel to it. Depending on the cholesteric pitch, polymerization condition and structure of the polymer network, polymer stabilized cholesteric texture (PSCT) commonly operated in normal and reverse mode light shutter. If the monomer is polymerized in the homeotropic (H) state of CLC, the formed polymer network is perpendicular to the cell substrates, which usually stabilizes the scattering focal conic (FC) texture, and the PSCT normal mode light modulation element is obtained. In a planar (P) texture, all the helical axes are arranged in the direction perpendicular to the substrate surfaces. If the pitch length is much larger or smaller than the wavelength of visible light, the cell will be transparent.

In the focal conic state, the helical axes are randomly arranged and texture shows strong light scattering because of the discontinuous spatial variations of the refractive indices at the domain boundaries. Effect of electric-field-driven textural transition between planar and focal conic states in polymer networks makes a base of operation of PSCT displays.

Both planar and focal conic configurations are stable in the absence of external electric field. However, the switching between states can be achieved only through the H state, where the cholesteric helix is completely unwound by a dielectric coupling between LC molecules with positive dielectric anisotropy ($\Delta\varepsilon > 0$) and vertical electric field.

Consequently high switching voltage is required for conventional PSCT optical devices. Conventionally, in general, CLC switching from the P state to the FC state is induced by a pulse of an AC square wave. When a high voltage beyond a critical value is applied, the CLC will go into the H state. Subsequent transition to the P state can be achieved, if the field is turned off quickly, however if the high voltage is turned off slowly, the H state of the CLC will be altered to FC state. In this driving scheme, the transition from the FC to P state is accomplished through an intermediate H state, and the transition time is very long due to the slow H to P transition.

This conventional drive scheme employs indirect transition paths to switch from the bistable FC state to the P state. Anyhow, switching from either the P or the light-scattering FC state to the other has been proposed for a variety of LC applications such as cholesteric displays, reverse-mode light shutters, and other electro-optical devices.

Very recently, thermally as well as electrically switchable bistable PSLC light shutters, which can maintain two optical states with the application of an additional electric field (and so called energy efficient), was reported (J. Ma, L. Shi, and D.-K. Yang, "Bistable polymer stabilized cholesteric texture light shutter," Appl. Phys. Express 3(2), 021702 (2010).

Ma et al. made use of dual frequency CLC to achieve electrically switchable bistable PSCT light. But still remains an unsolved problem how the reverse mode PSCT, with such outstanding electro-optical performances as fast switching speed, very small hysteresis, and selective reflection, can be made bistable. When a sufficiently large electric field perpendicular to the cell substrates is applied to the reverse mode PSCT, the polymer network becomes distorted and switching from the stable P texture to the stable FC texture is not capable of returning to the transparent P texture. A very high electric field is required to switch the shutter from opaque to transparent state via H state of CLC.

An alternative way of switching a CLC light modulation element between two stable states is to use dual-frequency nematic liquid crystals (DFLC). These DFLC materials have a high dielectric dispersion where the dielectric anisotropy, $\Delta\varepsilon(f)=\varepsilon_{||(f)}-\varepsilon_{\perp(f)}$ is frequency dependent, resulting in a change in sign at the crossover frequency $f_{co}$, where $\Delta\varepsilon_{(fco)}=0$. In some DFLC materials, $f_{co}$ occurs at a few kHz and $\Delta f_{co}$ changes significantly over the range 1-100 kHz. In a DFLC cell, the director can be driven between either homogeneous or homeotropic alignment by applying an electric field across the sample at a frequency either above or below $f_{co}$. As the molecules of the LC have a preferred direction (unit vector) along which they tend to be oriented. When an electric field is applied to the LC, it will exert a torque on the unit vector. Depending on the sign of the anisotropy, i.e. $\Delta\varepsilon>0$ or $\Delta\varepsilon<0$, this torque will turn the director respectively toward being parallel or perpendicular to the field direction.

Xu and D.-K. Yang reported on electro optical properties of a small size CLC reflective display by using DFLC material based on direct switching. However, the authors used a homogeneous polyimide (PI) alignment layer for the initial planar state, which makes the approach cost uncompetitive and it needs various manufacturing process steps for the device.

Further, the addressing scheme was not sufficiently fast to display dynamic images and the applied voltage across the pixel to address to the FC and P texture was very high 66 V and 100 V, respectively. Moreover, authors could not expose the retention time for the memory mode, visibility in P state and opacity in FC state, for the commercial application.

More recently, Y. C. Hsiao et al. also reported on the bistable cholesteric intensity modulator by using DFLC (Y.-C. Hsiao, C.-Y. Tang, and W. Lee, "Fast-switching bistable cholesteric intensity modulator," Opt. Express 19(10), 9744-9749 (2011)) with homogeneous polyimide alignment layer in the planar cell, but the operating voltage was still relatively high and the scattering power of the FC state was not enough to warrant the use of the device as an ideal

bistable light shutter. As the authors used the homogeneous PI layer in the planar cell, however the homogeneous alignment layer can give better alignment of the LC in initial planar state (before applied a high frequency field) but it always destabilize the FC state in pure cholesteric system at 0 V and FC state is not stable for long time in absence of the low frequency applied field.

Thus, there is a great demand for a reverse mode bistable CLC light shutter, preferably utilizing a dual frequency liquid crystal (DFLC) medium, without any homogeneous PI coating, which can be switched directly between transparent (or reflective) P state to opaque (or transparent) FC state and vice-versa by applying relatively very low electric field at different frequencies for the sign inversion of dielectric anisotropy.

Surprisingly, it now has been found that such a reverse mode bistable CLC light shutter or a light modulation element can be realized, which do not exhibit the drawbacks of the light modulation elements of the prior art or at least do exhibit them to a significantly lesser degree.

Terms and Definitions

The term "liquid crystal", "mesomorphic compound", or "mesogenic compound" (also shortly referred to as "mesogen") means a compound that under suitable conditions of temperature, pressure and concentration can exist as a mesophase (nematic, smectic, etc.) or in particular as a LC phase. Non-amphiphilic mesogenic compounds comprise for example one or more calamitic, banana-shaped or discotic mesogenic groups.

The term "mesogenic group" means in this context, a group with the ability to induce liquid crystal (LC) phase behaviour. The compounds comprising mesogenic groups do not necessarily have to exhibit an LC phase themselves. It is also possible that they show LC phase behaviour only in mixtures with other compounds. For the sake of simplicity, the term "liquid crystal" is used hereinafter for both mesogenic and LC materials.

The term "low molecular" means, that the relative molecular weight of a compound is less than 2000 g/mol.

The term "reactive mesogen" (RM) means a polymerisable mesogenic or liquid crystalline compound, which is preferably a monomeric compound.

The term "spacer" or "spacer group", also referred to as "Sp" above, is known to the person skilled in the art and is described in the literature, see, for example, Pure Appl. Chem. 73(5), 888 (2001) and C. Tschierske, G. Pelzl, S. Diele, Angew. Chem. 2004, 116, 6340-6368. Unless stated otherwise, the term "spacer" or "spacer group" above and below denotes a flexible organic group, which in a polymerisable mesogenic compound connects the mesogenic group and the polymerisable group(s).

Preferred spacer groups Sp are selected from the formula Sp'-X', so that the radical "P-Sp-" conforms to the formula "P-Sp'-X'-", where

Sp' denotes alkylene having 1 to 20, preferably 1 to 12 C atoms, which is optionally mono- or polysubstituted by F, Cl, Br, I or CN and in which, in addition, one or more non-adjacent $CH_2$ groups may each be replaced, independently of one another, by -O-, -S-, -NH-, $-NR^x-$, $-SiR^xR^{xx}-$, -CO-, -COO-, -OCO-, -OC O-O-, -S-CO-, -CO-S-, $-NR^x-CO-O-$, $-O-CO-NR^x-$, $-NR^x-CO-N R^x-$, -CH=CH- or -C≡C- in such a way that O and/or S atoms are not linked directly to one another,

X' denotes -O-, -S-, -CO-, -COO-, -OCO-, -O-COO-, $-CO-NR^x-$, $- NR^x-CO-$, $-NR^x-CO-NR^x-$, $-OCH_2-$, $-CH_2O-$, $-SCH_2-$, $-CH_2S-$, $- CF_2O-$, $-OCF_2-$, $-CF_2S-$, $-SCF_2-$, $-CF_2CH_2-$, $-CH_2CF_2-$, $-CF_2CF_2-$, -CH=N-, -N=CH-, -N=N-, $-CH=CR^x-$, $-CY^x=CY^{xx}-$, -C≡C-, -C H=CH-COO-, -OCO-CH=CH- or a single bond,

$R^x$ and $R^{xx}$ each, independently of one another, denote H or alkyl having 1 to 12 C atoms, and

$Y^x$ and $Y^{xx}$ each, independently of one another, denote H, F, Cl or CN.

X' is preferably -O-, -S, -CO-, -COO-, -OCO-, -O-COO-, $-CO-NR^x-$, $-NR^x-CO-$, $-NR^x-CO-NR^x-$ or a single bond.

Typical spacer groups Sp' are, for example, $-(CH_2)_{p1}-$, $-(CH_2CH_2O)_{q1}-CH_2CH_2-$, $-CH_2CH_2-S-CH_2CH_2-$, $-CH_2CH_2-NH-CH_2CH_2-$ or $-(SiR^xR^{xx}-O)_{p1}-$, in which p1 is an integer from 1 to 12, q1 is an integer from 1 to 3, and $R^x$ and $R^{xx}$ have the above-mentioned meanings.

Particularly preferred groups -X'-Sp'- are $-(CH_2)_{p1}-$, $-O-(CH_2)_{p1}-$, $-OCO-(CH_2)_{p1}-$, $-OCOO-(CH_2)_{p1}-$.

Particularly preferred groups Sp' are, for example, in each case straight-chain ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

Polymerisable compounds with one polymerisable group are also referred to as "monoreactive" compounds,

compounds with two polymerisable groups as "direactive" compounds, and compounds with more than two polymerisable groups as "multireactive" compounds. Compounds without a polymerisable group are also referred to as "non-reactive" compounds.

The polymerisable group (P) denotes a group that is capable of participating in a polymerisation reaction, like radical or ionic chain polymerisation, polyaddition or polycondensation, or capable of being grafted, for example by condensation or addition, to a polymer backbone in a polymer analogous reaction. Especially preferred are polymerisable groups for chain polymerisation reactions, like radical, cationic or anionic polymerisation. Very preferred are polymerisable groups comprising a - C=C- or -C=C- bond, and polymerisable groups capable of polymerisation by a ring-opening reaction, like oxetane or epoxies.

Suitable and preferred polymerisable groups (P) include, without limitation, $CH_2=CW^1$-COO-, $CH_2=CW^1$-CO-,

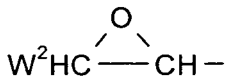 , 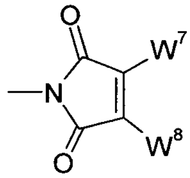 ,

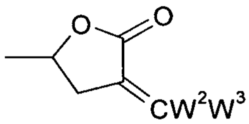 , 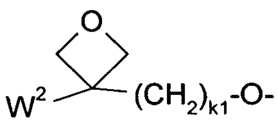 ,

$CH_2=CW^2-(O)_{k1}$-, $CH_3$-CH=CH-O-, $(CH_2=CH)_2$CH-OCO-, $(CH_2=CH-CH_2)_2$CH-OCO-, $(CH_2=CH)_2$CH-O-, $(CH_2=CH-CH_2)_2$N-, $(CH_2=CH-CH_2)_2$N-CO-, HO-$CW^2W^3$-, HS-$CW^2W^3$-, $HW^2$N-, HO-$CW^2W^3$-NH-, $CH_2=CW^1$-CO-NH-, $CH_2=CH-(COO)_{k1}$-Phe-$(O)_{k2}$-, $CH_2=CH-(CO)_{k1}$-Phe-$(O)_{k2}$-, Phe-CH=CH-, HOOC-, OCN-, and $W^4W^5W^6$Si-, with $W^1$ being H, F, Cl, CN, $CF_3$, phenyl or alkyl with 1 to 5 C-atoms, in particular H, Cl or $CH_3$, $W^2$ and $W^3$ being independently of each other H or alkyl with 1 to 5 C-atoms, in particular H, methyl, ethyl or n-propyl, $W^4$, $W^5$ and $W^6$ being independently of each other Cl, oxaalkyl or oxacarbonylalkyl with 1 to 5 C-atoms, $W^7$ and $W^8$ being independently of each other H, Cl or alkyl with 1 to 5 C-atoms, Phe being 1,4-phenylene that is optionally substituted, preferably by one or more groups L as defined above (except for the meaning P-Sp-), and $k_1$ and $k_2$ being independently of each other 0 or 1.

Very preferred polymerisable groups are selected from $CH_2=CW^1$-COO-, $CH_2=CW^1$-CO-,

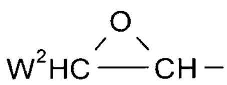 , 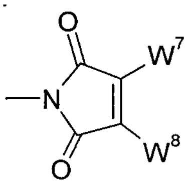 , 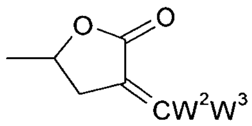 ,

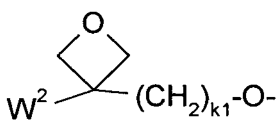 ,

$(CH_2=CH)_2$CH-OCO-, $(CH_2=CH-CH_2)_2$CH-OCO-, $(CH_2=CH)_2$CH-O-, $(CH_2=CH-CH_2)_2$N-, $(CH_2=CH-CH_2)_2$N-CO-, HO-$CW^2W^3$-, HS-$CW^2W^3$-, $HW^2$N-, HO-$CW^2W^3$-NH-, $CH_2=CW^1$-CO-NH-, $CH_2=CH-(COO)_{k1}$-Phe-$(O)_{k2}$-, $CH_2=CH-(CO)_{k1}$-Phe-$(O)_{k2}$-, Phe-CH=CH-, HOOC-, OCN-, and $W^4W^5W^6$Si-, with $W^1$ being H, F, Cl, CN, $CF_3$, phenyl or alkyl with 1 to 5 C-atoms, in particular H, F, Cl or $CH_3$, $W^2$ and $W^3$ being independently of each other H or alkyl with 1 to 5 C-atoms, in particular H, methyl, ethyl or n-propyl, $W^4$, $W^5$ and $W^6$ being independently of each other Cl, oxaalkyl or oxacarbonylalkyl with 1 to 5 C-atoms, $W^7$ and $W^8$ being independently of each other H, Cl or alkyl with 1 to 5 C-atoms, Phe being 1,4-phenylene that is optionally substituted preferably by one or more groups L as defined above (except for the meaning P-Sp-), and $k_1$ and $k_2$ being independently of each other 0 or 1.

Most preferred polymerisable groups are selected from $CH_2$=CH-COO-, $CH_2=C(CH_3)$-COO-, $CH_2$=CF-COO-, $(CH_2=CH)_2$CH-OCO-, $(CH_2=CH)_2$CH-O-,

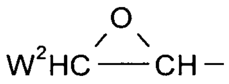 and 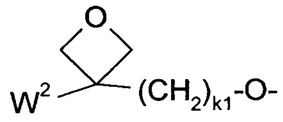.

The term "polymerisation" means the chemical process to form a polymer by bonding together multiple polymerisable units or polymer precursors containing such polymerisable units.

The term "polymer" means a long or larger molecule consisting of a chain or network of many repeating units, formed by chemically bonding together many small molecules called monomers. A polymer is formed by polymerization, the joining of many monomer molecules or polymer precursors.

A "polymer network" is a network in which all polymer chains are interconnected to form a single macroscopic entity by many crosslinks. The polymer network can occur in the following types:

- A graft polymer molecule is a branched polymer molecule in which one or more the side chains are different, structurally or configurationally, from the main chain.
- A star polymer molecule is a branched polymer molecule in which a single branch point gives rise to multiple linear chains or arms. If the arms are identical the star polymer molecule is said to be regular. If adjacent arms are composed of different repeating subunits, the star polymer molecule is said to be variegated.
- A comb polymer molecule consists of a main chain with two or more three-way branch points and linear side chains. If the arms are identical the comb polymer molecule is said to be regular.
- A brush polymer molecule consists of a main chain with linear, unbranched side chains and where one or more of the branch points has four-way functionality or larger.

As used herein, the terms "particle(s)" and "polymer particle(s)" are used interchangeably, and mean a multitude of isolated solid particles having uniform shape and defined dimensions, which are preferably obtained directly from a monomeric material by a polymerization process, and which more preferably exhibit optical anisotropy.

Throughout the application, the term "aryl and heteroaryl groups" encompass groups, which can be monocyclic or polycyclic, i.e. they can have one ring (such as, for example, phenyl) or two or more rings, which may also be fused (such as, for example, naphthyl) or covalently linked (such as, for example, biphenyl), or contain a combination of fused and linked rings. Heteroaryl groups contain one or more heteroatoms, preferably selected from O, N, S and Se. Particular preference is given to mono-, bi- or tricyclic aryl groups having 6 to 25 C atoms and mono-, bi- or tricyclic heteroaryl groups having 2 to 25 C atoms, which optionally contain fused rings, and which are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another. Preferred aryl groups are, for example, phenyl, biphenyl, terphenyl, [1,1':3',1"]terphenyl-2'-yl, naphthyl, anthracene, binaphthyl, phenanthrene, pyrene, dihydropyrene, chrysene, perylene, tetracene, pentacene, benzopyrene, fluorene, indene, indenofluorene, spirobifluorene, more preferably 1,4-phenylene, 4,4'-biphenylene, 1, 4-tephenylene.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiadiazothiophene, or combinations of these groups. The heteroaryl groups may also be substituted by alkyl, alkoxy, thioalkyl, fluorine, fluoroalkyl or further aryl or heteroaryl groups.

In the context of this application, the term "(non-aromatic) alicyclic and heterocyclic groups" encompass both saturated rings, i.e. those that contain exclusively single bonds, and partially unsaturated rings, i.e. those that may also contain multiple bonds. Heterocyclic rings contain one or more heteroatoms, preferably selected from Si, O, N, S and Se. The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 3 to 25 C atoms, which optionally contain fused rings and that are optionally substituted. Preference is furthermore given to 5-, 6-, 7- or 8-membered carbocyclic groups in which, in addition, one or more C atoms may be

replaced by Si and/or one or more CH groups may be replaced by N and/or one or more non-adjacent $CH_2$ groups may be replaced by -O- and/or -S-. Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]-pentane-1,3-diyl, bicyclo[2.2.2]octane-1,4-diyl, spiro[3.3]heptane-2,6-diyl, octahydro-4,7-methanoindane-2,5-diyl, more preferably 1,4-cyclohexylene 4,4'- bicyclohexylene, 3,17-hexadecahydro-cyclopenta[a]phenanthrene, optionally being substituted by one or more identical or different groups L. Especially preferred aryl-, heteroaryl-, alicyclic- and heterocyclic groups are 1,4-phenylene, 4,4'-biphenylene, 1, 4-terphenylene, 1,4-cyclohexylene, 4,4'- bicyclohexylene, and 3,17-hexadecahydro-cyclopenta[a]-phenanthrene, optionally being substituted by one or more identical or different groups L.

Preferred substituents (L) of the above-mentioned aryl-, heteroaryl-, alicyclic- and heterocyclic groups are, for example, solubility-promoting groups, such as alkyl or alkoxy and electron-withdrawing groups, such as fluorine, nitro or nitrile. Particularly preferred substituents are, for example, F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$ or $OC_2F_5$.

Above and below "halogen" denotes F, Cl, Br or I.

Above and below, the terms "alkyl", "aryl", "heteroaryl", etc., also encompass polyvalent groups, for example alkylene, arylene, heteroarylene, etc. The term "aryl" denotes an aromatic carbon group or a group derived there from. The term "heteroaryl" denotes "aryl" in accordance with the above definition containing one or more heteroatoms. Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkoxy groups are, for example, methoxy, ethoxy, 2-methoxy-ethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl.

Preferred alkynyl groups are, for example, ethynyl, propynyl, butynyl, pentynyl, hexynyl, octynyl.

Preferred amino groups are, for example, dimethylamino, methylamino, methylphenylamino, phenylamino.

The term "chiral" in general is used to describe an object that is non-superimposable on its mirror image.

"Achiral" (non- chiral) objects are objects that are identical to their mirror image.

The terms "chiral nematic" and "cholesteric" are used synonymously in this application, unless explicitly stated otherwise.

The term "alignment" or "orientation" relates to alignment (orientation ordering) of anisotropic units of material such as small molecules or fragments of big molecules in a common direction named "alignment direction". In an aligned layer of liquid-crystalline material, the liquid-crystalline director coincides with the alignment direction so that the alignment direction corresponds to the direction of the anisotropy axis of the material.

The term "planar orientation/alignment", for example in a layer of an liquid-crystalline material, means that the long molecular axes (in case of calamitic compounds) or the short molecular axes (in case of discotic compounds) of a proportion of the liquid-crystalline molecules are oriented substantially parallel (about 180°) to the plane of the layer.

The term "homeotropic orientation/alignment", for example in a layer of a liquid-crystalline material, means that the long molecular axes (in case of calamitic compounds) or the short molecular axes (in case of discotic compounds) of a proportion of the liquid-crystalline molecules are oriented at an angle $\theta$ ("tilt angle") between about 80° to 90° relative to the plane of the layer.

The wavelength of light generally referred to in this application is 550 nm, unless explicitly specified otherwise.

The birefringence $\Delta n$ herein is defined in the following equation

$$\Delta n = n_e - n_o$$

wherein $n_e$ is the extraordinary refractive index and no is the ordinary refractive index, and the average refractive index $n_{av.}$ is given by the following equation.

$$n_{av.} = [(2\, n_o^2 + n_e^2)/3]^{1/2}$$

The extraordinary refractive index ne and the ordinary refractive index no can be measured using an Abbe refractometer. $\Delta n$ can then be calculated.

In the present application the term "dielectrically positive" is used for compounds or components with $\Delta\varepsilon > 3.0$, "dielectrically neutral" with $-1.5 \leq \Delta\varepsilon \leq 3.0$ and "dielectrically negative" with $\Delta\varepsilon < -1.5$. $\Delta\varepsilon$ is determined at a frequency of 1 kHz and at 20 °C. The dielectric anisotropy of the respective compound is determined from the results of a solution of 10 % of the respective individual compound in a nematic host mixture. In case the solubility of the respective compound in the host medium is less than 10 % its concentration is reduced by a factor of 2 until the resultant medium is stable enough at least to allow the determination of its properties. Preferably, the concentration is kept at least at 5 %, however, in order to keep the significance of the results as high as possible. The capacitance of the test mixtures are determined both in a cell with homeotropic and with homogeneous alignment. The cell gap of both types of cells is approximately 20 μm. The voltage applied is a rectangular wave with a frequency of 1 kHz and a root mean square value typically of 0.5 V to 1.0 V, however, it is always selected to be below the capacitive threshold of the respective test mixture.

$\Delta\varepsilon$ is defined as $(\varepsilon|| - \varepsilon_{\perp})$, whereas $\varepsilon_{av.}$ is $(\varepsilon|| + 2\ \varepsilon_{\perp}) / 3$.

A dual frequency cholesteric liquid crystalline mixture is usually composed of two categories of materials:

(1) Compounds exhibit a positive dielectric anisotropy at low frequencies; and
(2) Compounds exhibit a negative dielectric anisotropy at high frequencies.

The crossover frequency is defined as the frequency at which the dielectric anisotropy changes sign. A direct switching between a transparent planar (P) state to an opaque focal conic (FC) state can be demonstrated by DF-ChLC.

Furthermore, the definitions as given in C. Tschierske, G. Pelzl and S. Diele, Angew. Chem. 2004, 116, 6340-6368 shall apply to non-defined terms related to liquid crystal materials in the instant application.

Detailed Description

In accordance with the invention, the substrates may consist, inter alia, each and independently from another of a polymeric material, of metal oxide, for example ITO and of glass or quartz plates, preferably each and independently of another of glass and/or ITO, in particular glass/glass.

Suitable and preferred polymeric substrates are for example films of cyclo olefin polymer (COP), cyclic olefin copolymer (COC), polyester such as polyethyleneterephthalate (PET) or polyethylene-naphthalate (PEN), polyvinylalcohol (PVA), polycarbonate (PC) or triacetylcellulose (TAC), very preferably PET or TAC films. PET films are commercially available for example from DuPont Teijin Films under the trade name Melinex®. COP films are commercially available for example from ZEON Chemicals L.P. under the trade name Zeonor® or Zeonex®. COC films are commercially available for example from TOPAS Advanced Polymers Inc. under the trade name Topas®.

In a preferred embodiment of the invention, the layer of the liquid-crystalline medium is located between two flexible layers, for example flexible polymer films. The device according to the invention is consequently flexible and bendable and can be rolled up, for example. The flexible layers can represent the substrate layer, the alignment layer, and/or polarisers. Further layers, which are preferable flexible, may also, be present. For a more detailed disclosure of the preferred embodiments, in which the layer of the liquid-crystalline medium is located between flexible layers, reference is given to the application US 2010/0045924.

The substrate layers can be kept at a defined separation from one another by, for example, spacers, or projecting structures in the layer. Typical spacer materials are commonly known to the expert and are selected, for example, from plastic, silica, epoxy resins, etc.

In a preferred embodiment, the substrates are arranged with a separation in the range from approximately 1 μm to approximately 20 μm from one another, preferably in the range from approximately 1.5 μm to approximately 10 μm from one another, and more preferably in the range from approximately 2 μm to approximately 5 μm from one another. The layer of the cholesteric liquid-crystalline medium is thereby located in the interspace.

In a preferred embodiment, the light modulation element comprises an electrode structure, which is capable to allow the application of an electric field, which is substantially perpendicular to the substrates or the liquid-crystalline medium layer.

Preferably, the light modulation element comprises an electrode structure which is provided as an electrode layer on the entire substrate and/or the pixel area and which is in direct contact to the cholesteric liquid crystalline medium.

Suitable electrode materials are commonly known to the expert, as for example electrode structures made of metal or metal oxides, such as, for example transparent indium tin oxide (ITO), which is preferred according to the present invention.

Thin films of ITO are commonly deposited on substrates by physical vapor deposition, electron beam evaporation, or sputter deposition techniques.

In a preferred embodiment, the light modulation element comprises at least one alignment layer which is provided on the electrode structure. However it is likewise preferred, that no alignment layer is present in the light modulation element according to the present invention.

If at least one an alignment layer is present, the alignment layer is preferably provided on the electrode structure.

Preferably, the alignment layer induces a homeotropic alignment, tilted homeotropic or planar alignment to the adjacent liquid crystal molecules, and which is provided on the common electrode structure and/or alignment electrode structure as described above.

Preferably, the alignment layer(s) is/are made of homeotropic alignment layer materials, which are commonly known to the expert, such as, for example, layers made of alkoxysilanes, alkyltrichlorosilanes, CTAB, lecithin or polyimides, such as for example SE-5561, commercially available for example from Nissan, or AL-3046, 5561 commercially available for example from JSR Corporation.

The alignment layer can be applied onto the substrate array or electrode structure by conventional coating techniques like spin coating, roll-coating, dip coating or blade coating. It can also be applied by vapor deposition or conventional printing techniques, which are known to the expert, like for example screen printing, offset printing, reel-to-reel printing, letter press printing, gravure printing, rotogravure printing, flexographic printing, intaglio printing, pad printing, heat-seal printing, ink-jet printing or printing by means of a stamp or printing plate.

In a preferred embodiment, the alignment layer(s) is/are preferably rubbed by rubbing techniques known to the skilled person in the art.

According to another preferred embodiment, the first electrode structure is not directly adjacent to the first substrate layer, and the second electrode layer is not directly adjacent to the second substrate layer, but a dielectric layer, which is preferably a barrier layer against ion migration is present between the respective substrate layer and the respective conductive layer.

Typical dielectric layer materials are commonly known to the expert, such as, for example, SiOx, SiNx, Cytop, Teflon, and PMMA.

The dielectric layer materials can be applied onto the substrate or electrode layer by conventional coating techniques like spin coating, roll-coating, blade coating, or vacuum deposition such as PVD or CVD. It can also be applied to the substrate or electrode layer by conventional printing techniques which are known to the expert, like for example screen printing, offset printing, reel-to-reel printing, letter press printing, gravure printing, rotogravure printing, flexographic printing, intaglio printing, pad printing, heat-seal printing, ink-jet printing or printing by means of a stamp or printing plate.

The light modulation element may furthermore comprise filters, which block light of certain wavelengths, for example, UV filters. In accordance with the invention, further functional layers commonly known to the expert may also be present, such as, for example, protective films and/or compensation films.

The cholesteric liquid crystalline medium utilized for the light modulation element according to the present invention comprises one or more non-polymerisable mesogenic compounds, one or more chiral compounds, and one or more particles.

Suitable cholesteric liquid crystalline media consist of several compounds, preferably of 3 to 30, more preferably of 4 to 20 and most preferably of 4 to 16 compounds. These compounds are mixed in a conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e.g. using so called pre-mixtures, which can be e.g. homologous or eutectic mixtures of compounds or using so called multi-bottle-systems, the constituents of which are ready to use mixtures themselves.

In a preferred embodiment, the cholesteric liquid crystalline medium utilized for the light modulation element according to the present invention comprises one or more non-polymerisable mesogenic compounds having a positive dielectric anisotropy and one or more non-polymerisable mesogenic compound having negative dielectric anisotropy.

According to the invention, the cholesteric liquid crystalline medium is a dual frequency cholesteric liquid crystalline medium.

According to the invention, the non-polymerisable mesogenic compounds of cholesteric liquid crystalline medium comprises one or more compounds of formulae B-I, optionally one or more compounds of formula B-II, and one or more compounds of formula B-III

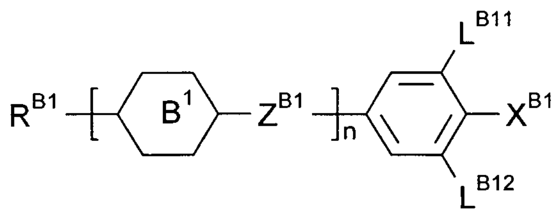

B-I

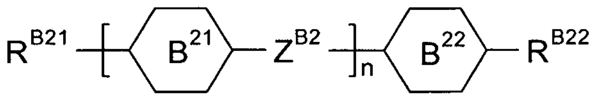

B-II

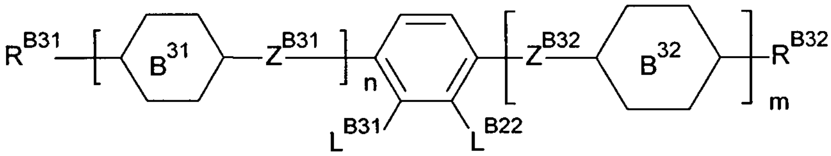

B-III

wherein

$L^{B11}$ to $L^{B31}$ are independently H or F, whereby $L^{B22}$ and $L^{B31}$ denote F if not at least one of

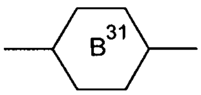

and

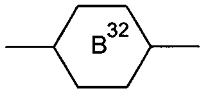

denotes

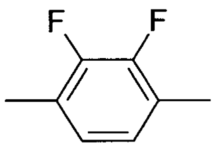

,

$R^{B1}$, $R^{B21}$, $R^{B22}$ $R^{B31}$ and $R^{B32}$ are each independently a straight-chain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, -N($CH_3$)-, -CO-, -COO-, -OCO-, -O-CO-O-, -S-CO-, -CO-S-, -CH=CH-, -CH=CF-, - CF=CF- or -C≡C- in such a manner that oxygen atoms are not linked directly to one another,

$X^{B1}$ is F, Cl, CN, NCS, $OCF_2H$, $OCF_3$, $CF_3$, preferably CN,

$Z^{B1}$, $Z^{B2}$, $Z^{B31}$ and $Z^{B32}$ are in each occurrence independently -$CH_2$-$CH_2$-, -CO-O-, -O-CO-, -$CF_2$-O-, -O- $CF_2$-, -CH=CH-, -C≡C- or a single bond, preferably -$CH_2$-$CH_2$-, -CO-O-, -CH=CH-, -C≡C- or a single bond,

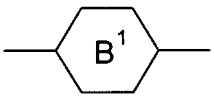

,

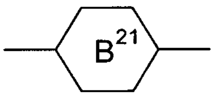

,

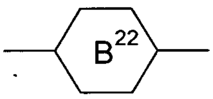

,

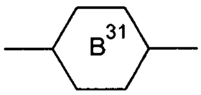 and 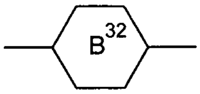

are in each occurrence independently

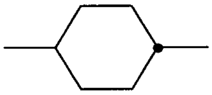, 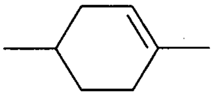 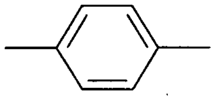 or

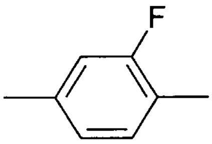,

preferably

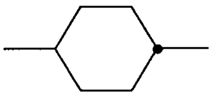, 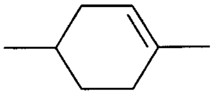 or 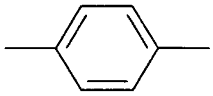,

alternatively one or more of

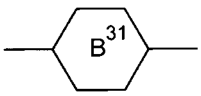 or 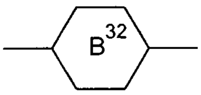

are

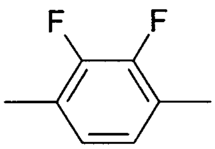,

n is 1, 2 or 3, preferably 1 or 2, and

m is 0, 1, 2, preferably 0 or 1.

Preferably, the non-polymerisable mesogenic compounds of formula B-I are selected from the group of compounds of formulae B-I-1 to B-I-10,

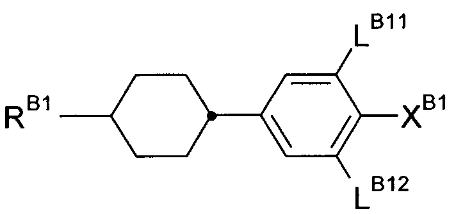

B-I-1

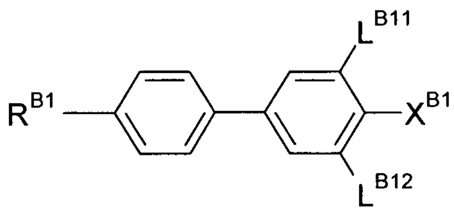

B-I-2

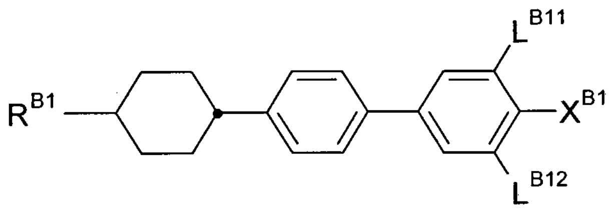

B-I-3

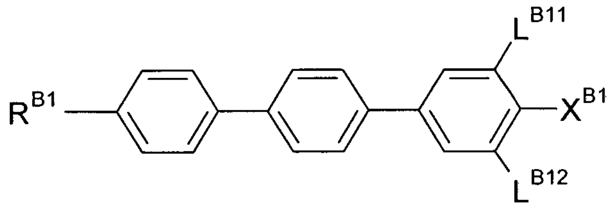

B-I-4

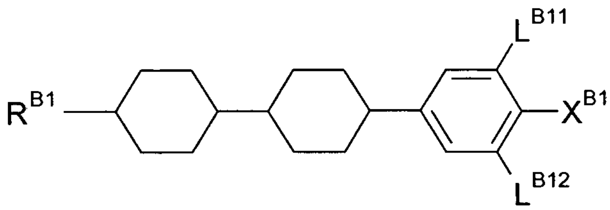

B-I-5

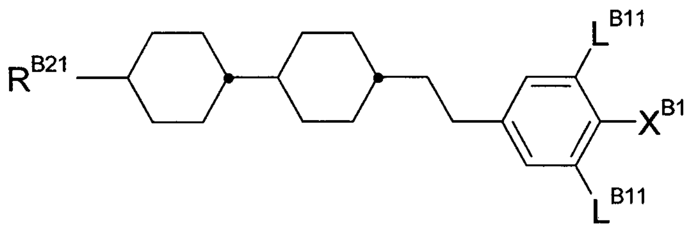

B-I-6

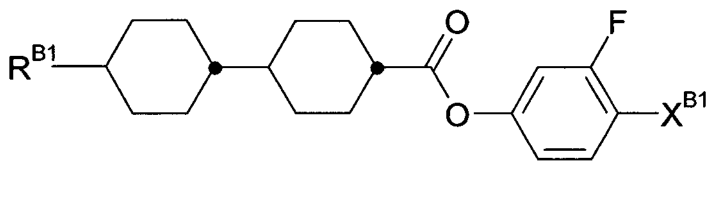

B-I-7

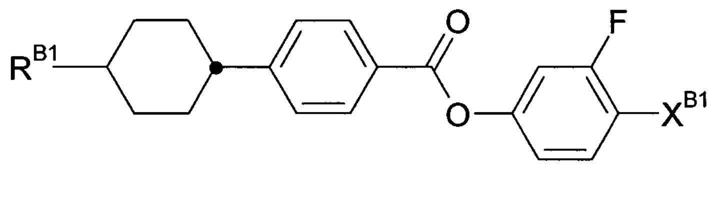

B-I-8

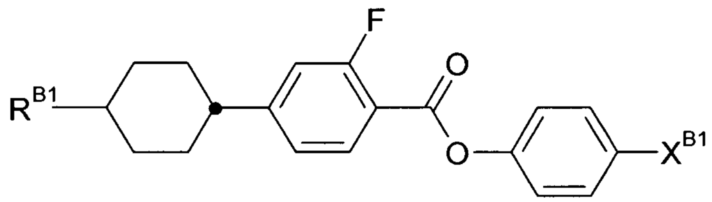

B-I-9

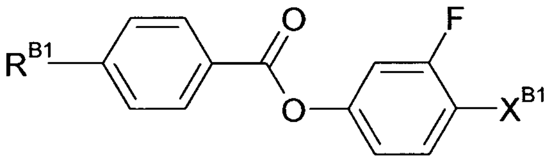

B-I-10

wherein the parameters have the meanings given above and preferably

$R^{B1}$ is alkyl, alkoxy, alkenyl or alkenyloxy with up to 12 C atoms,

$X^{B1}$ is F, Cl, CN, NCS, $OCF_3$, preferably CN, $OCF_3$ or F, and

Preferably, the non-polymerisable mesogenic compounds of formula B-II are selected from the following group of compounds,

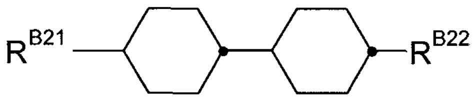

B-II-1

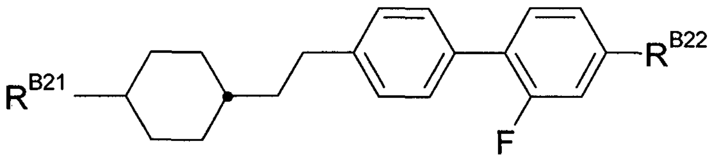

B-II-2

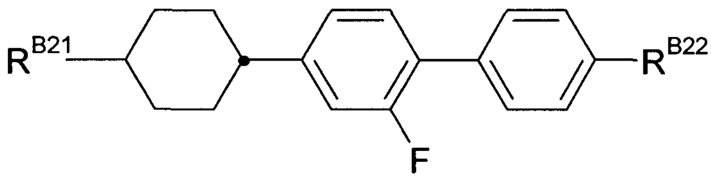

B-II-3

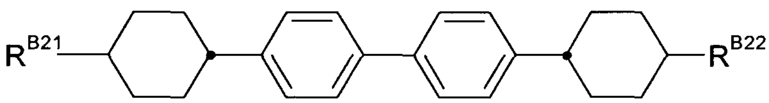

B-II-4

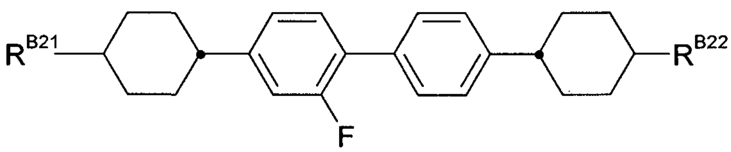

B-II-5

wherein the parameters have the meanings given above and preferably

$R^{B21}$ and $R^{B22}$ are independently alkyl, alkoxy, alkenyl or alkenyloxy with up to 12 C atoms, more preferably $R^{B21}$ is alkyl and $R^{B22}$ is alkyl, alkoxy or alkenyl and in formula B-II-1 most preferably alkenyl, in particular vinyl or 1-propenyl, and in formula B-II-2, most preferably alkyl.

Preferably, the non-polymerisable mesogenic compounds of formula B-III are selected from the group of the following compounds,

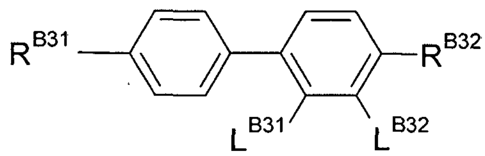

B-III-1

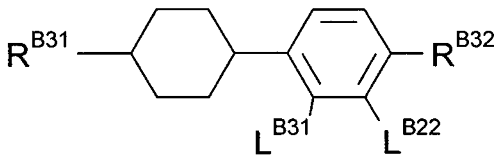

B-III-2

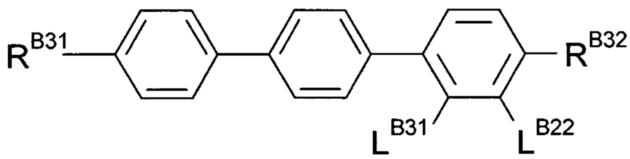

B-III-3

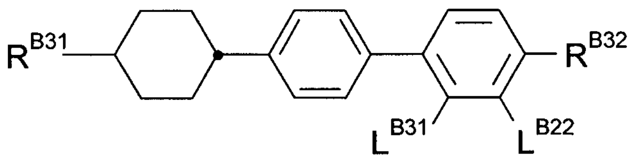

B-III-4

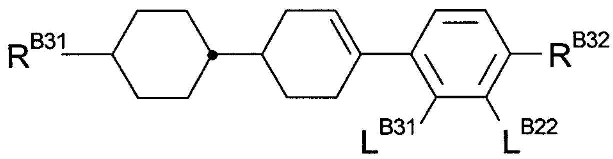

B-III-5

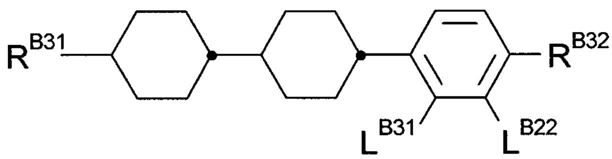

B-III-6

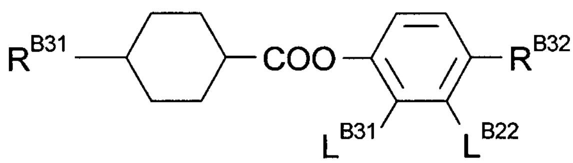

B-III-7

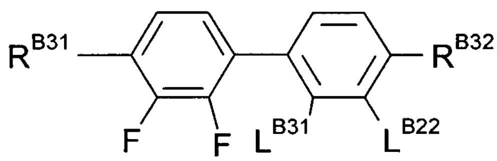

B-III-8

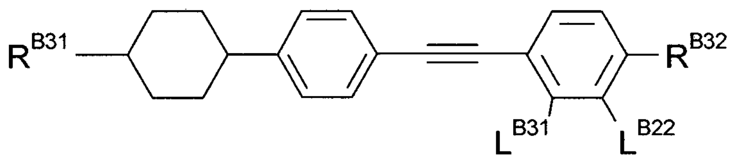

B-III-9

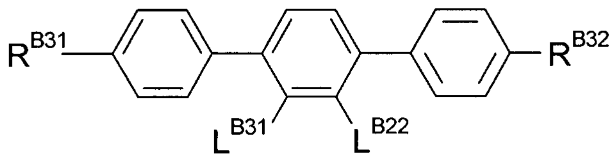

B-III-10

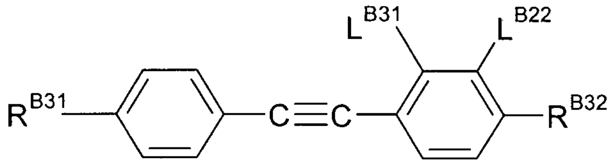

B-III-11

wherein the parameters have the meanings given above and preferably

$R^{B31}$ and $R^{B32}$ are independently alkyl, alkoxy, alkenyl or alkenyloxy with up to 12 C atoms, more preferably $R^{B31}$ is alkyl and $R^{B32}$ is alkyl or alkoxy and most preferably alkoxy, and

The compounds of formulae B-I to B-III are either known to the expert and can be synthesized according to, or in analogy to methods which are known per se and which are described in standard works of organic chemistry such as, for example, Houben-Weyl, Methoden der organischen Chemie, Thieme-Verlag, Stuttgart.

The cholesteric liquid crystalline medium for the light modulation element according to the present invention comprises one or more compounds of formula B-I, one or more compounds of formula B-III and optionally one or more compounds of formula B-II.

The amount of non-polymerisable mesogenic compounds, preferably of one or more compounds of formulae B-I, B-II, and or B-III, in the liquid-crystalline medium is preferably from 50 to 98 %, more preferably from 60 to 95 %, even more preferably 70 to 90 %, and most preferably 80 to 90 %, by weight of the total mixture.

The cholesteric liquid crystalline medium for the light modulation element according to the present invention comprises one or more chiral compounds. These chiral compounds may be non-mesogenic compounds or mesogenic compounds. These chiral compounds, whether mesogenic or non-mesogenic, may be non-reactive, monoreactive or multireactive.

The utilized chiral compounds according to the present invention have each alone or in combination with each other an absolute value of the helical twisting power ($|HTP_{total}|$) of 5 $\mu m^{-1}$ or more, preferably of 40 $\mu m^{-1}$ or more, more preferably in the range of 60 $\mu m^{-1}$ or more, most preferably in the range of 80 $\mu m^{-1}$ or more to 260 $\mu m^{-1}$, in particular those disclosed in WO 98/00428.

More preferably, the non-polymerisable chiral compounds are selected from the group of compounds of formulae C-I to C-III,

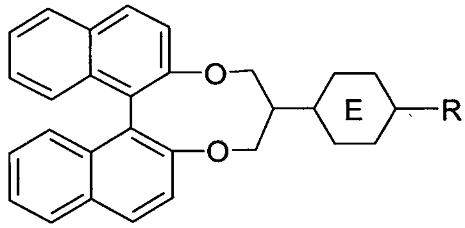

C-I

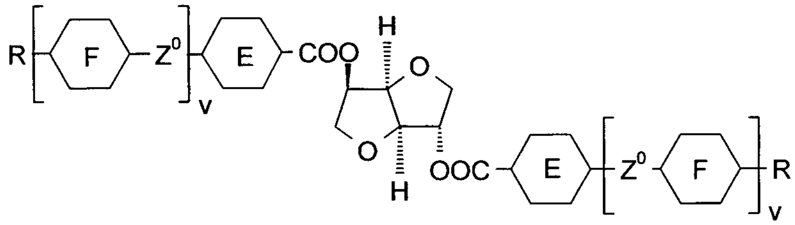

C-II

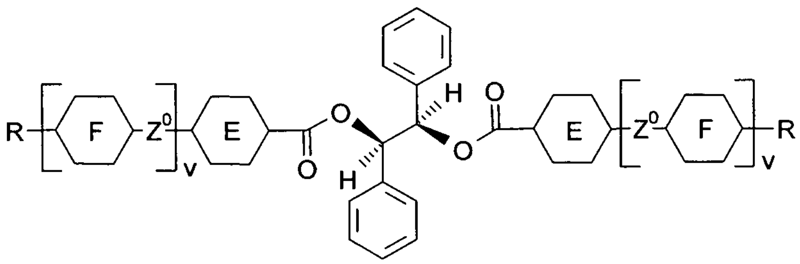

C-III

the latter ones including the respective (S,S) enantiomers,

wherein E and F are each independently 1,4-phenylene or trans-1,4-cyclohexylene, v is 0 or 1, $Z^0$ is -COO-, -OCO-, $-CH_2CH_2-$ or a single bond, and R is alkyl, alkoxy or alkanoyl with 1 to 12 C atoms.

Particularly preferred cholesteric liquid crystalline media comprise one or more chiral compounds, which do not necessarily have to show a liquid crystalline phase.

The compounds of formula C-II and their synthesis are described in WO 98/00428. Especially preferred is the compound CD-1, as shown in table D below. The compounds of formula C-III and their synthesis are described in GB 2 328 207.

Further, typically used chiral compounds are e.g. the commercially available R/S-5011, CD-1, R/S-811 and CB-15 (from Merck KGaA, Darmstadt, Germany).

The above mentioned chiral compounds R/S-5011 and CD-1 and the (other) compounds of formulae C-I, C-II and C-III exhibit a very high helical twisting power (HTP), and are therefore particularly useful for the purpose of the present invention.

The cholesteric liquid crystalline medium preferably comprises preferably 1 to 5, in particular 1 to 3, very preferably 1 or 2 chiral compounds, preferably selected from the above formula C-II, in particular CD-1, and/or formula C-III and/or R-5011 or S-5011, very preferably, the chiral compound is R-5011, S-5011 or CD-1.

In another preferred embodiment, the cholesteric liquid crystalline media comprise one or more non-reactive chiral compound and/or one or more monoreactive chiral compounds and/or one or more multireactive, preferably direactive chiral compounds.

Suitable mesogenic mono-reactive chiral compounds preferably comprise one or more ring elements, linked together by a direct bond or via a linking group and, where two of these ring elements optionally may be linked to each other, either directly or via a linking group, which may be identical to or different from the linking group mentioned. The ring elements are preferably selected from the group of four-, five-, six- or seven-, preferably of five- or six-, membered rings.

Preferred polymerisable chiral compounds and their synthesis are described in US 7,223,450.

The polymerisable chiral compounds are preferably selected from compounds of formula CRM.

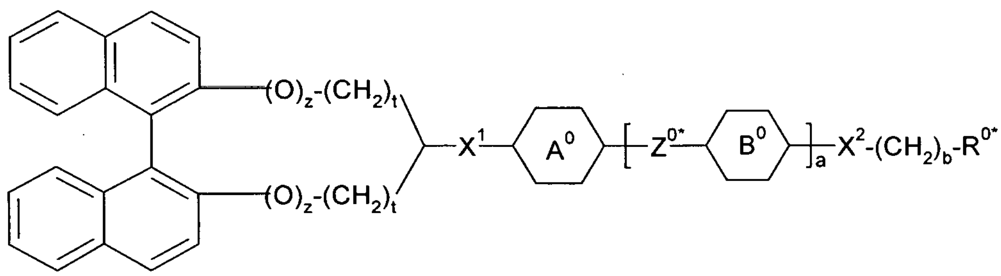

CRM

wherein

$R^{0*}$ is H or P, with P being a polymerisable group

$A^0$ and $B^0$ are, in case of multiple occurrence independently of one another, 1,4-phenylene that is unsubstituted or substituted with 1, 2, 3 or 4 groups L as defined above, or trans-1,4-cyclohexylene,

$X^1$ and $X^2$ are independently of each other -O-, -COO-, -OCO-, -O-CO-O- or a single bond,

$Z^{0*}$ is, in case of multiple occurrence independently of one another, -COO-, -OCO-, -O-CO-O-, $-OCH_2-$, $-CH_2O-$, $-CF_2O-$, $-OCF_2-$, $-CH_2CH_2-$, $-(CH_2)_4-$, $-CF_2CH_2-$, $-CH_2CF_2-$, $-CF_2CF_2-$, -C≡C-, -CH=CH-, -CH=CH-COO-, -OCO-CH=CH- or a single bond,

t is, independently of each other 0, 1, 2 or 3,

a is 0, 1 or 2,

b is 0 or an integer from 1 to 12,

z is 0 or 1,

and wherein the naphthalene rings can additionally be substituted with one or more identical or different groups L wherein

L is, independently of each other F, Cl, CN, halogenated alkyl, alkoxy, alkylcarbonyl, alkoxycarbonyl, alkylcarbonyloxy or alkoxycarbonyloxy with 1 to 5 C atoms.

The compounds of formula CRM are preferably selected from the group of compounds of formulae CRM-a.

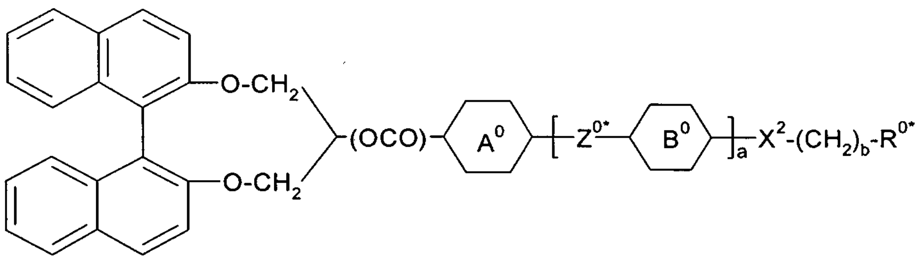

CRM-a

wherein $A^0$, $B^0$, $Z^{0*}$, $R^{0*}$, a and b have the meanings given in formula CRM or one of the preferred meanings given above and below, and (OCO) denotes -O-CO- or a single bond.

Especially preferred compounds of formula CRM are selected from the group consisting of the following sub-formulae:

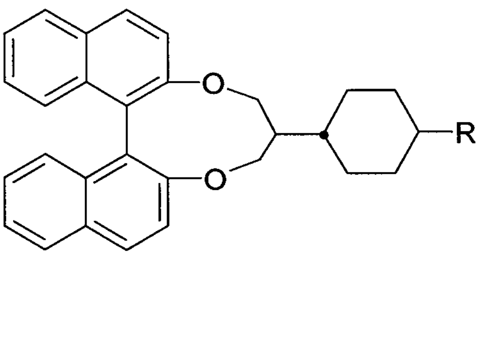

CRM-a1

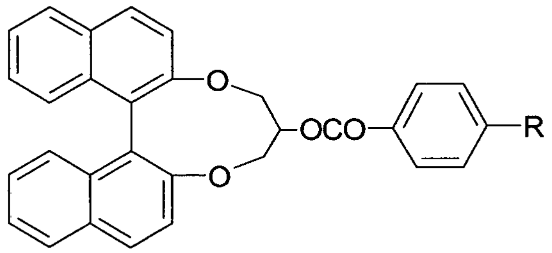

CRM-a2

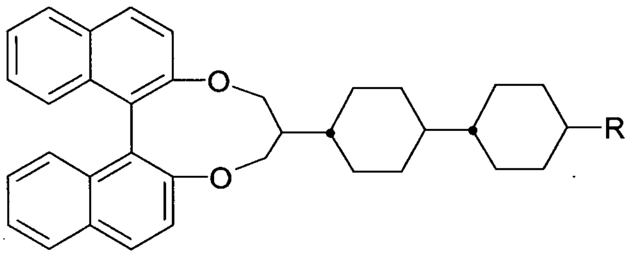

CRM-a3

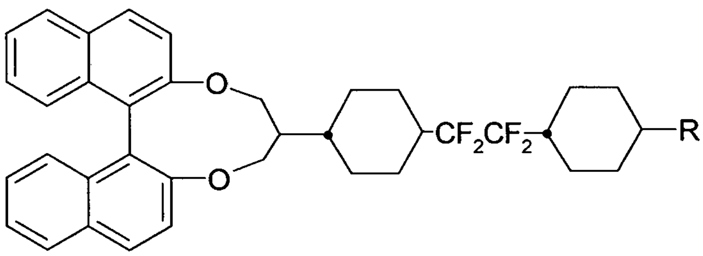

CRM-a4

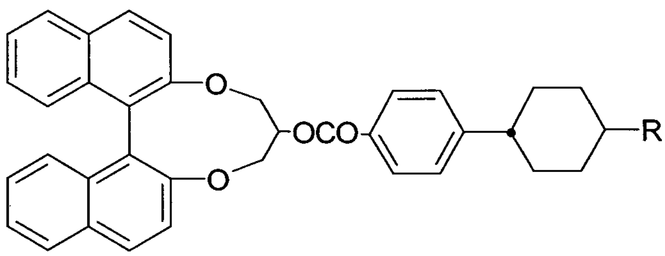

CRM-a5

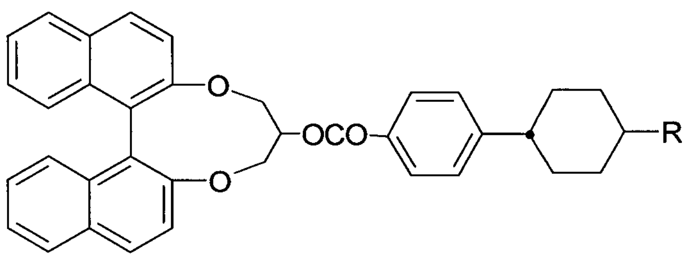

CRM-a6

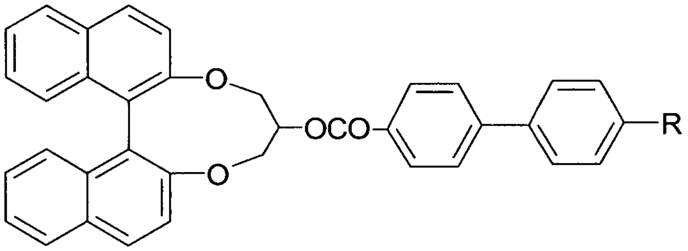

CRM-a7

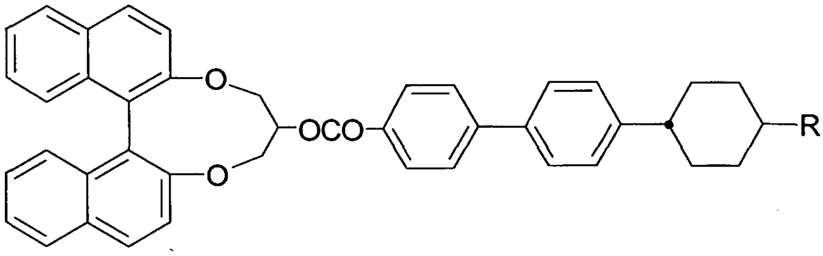

CRM-a8

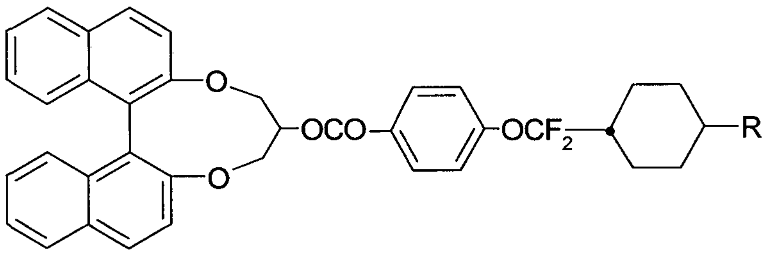

CRM-a9

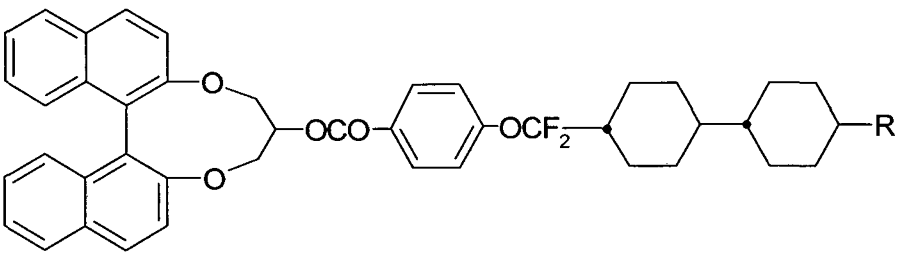

CRM-a10

wherein R is $-X^2-(CH_2)_x-R^{0*}$ as defined in formula CRM-a, and the benzene and naphthalene rings are unsubstituted or substituted with 1, 2, 3 or 4 groups L as defined above and below. Preferably $R^{0*}$ is a polymerisable group as defined above.

The amount of chiral compounds in total in the cholesteric liquid crystalline medium is preferably from 1 to 20 %, more preferably from 1 to 15 %, even more preferably 1 to 10 %, and most preferably 1 to 5 %, by weight of the total mixture.

In another preferred embodiment a polymerisable compound is added to the above described liquid-crystalline medium and, after introduction into the light modulation element, is polymerised or cross-linked in situ, usually by UV photopolymerisation. The addition of polymerisable mesogenic or liquid-crystalline compounds, also known as "reactive mesogens" (RMs), to the LC mixture has been proven particularly suitable in order further to stabilise the CLC texture.

Suitable polymerisable liquid-crystalline compounds are preferably selected from the group of compounds of formula D,

$$P\text{-}Sp\text{-}MG\text{-}R^0 \qquad D$$

wherein

P is a polymerisable group,

Sp is a spacer group or a single bond,

MG is a rod-shaped mesogenic group, which is preferably selected of formula M,

M is $-(A^{D21}-Z^{D21})_k-A^{D22}-(Z^{D22}-A^{D23})_l-$,

$A^{D21}$ to $A^{D23}$ are in each occurrence independently of one another an aryl-, heteroaryl-, heterocyclic- or alicyclic group optionally being substituted by one or more identical or different groups L, preferably 1,4-cyclohexylene or 1,4-phenylene, 1,4 pyridine, 1,4-pyrimidine, 2,5-thiophene, 2,6-dithieno[3,2-b:2',3'-d] thiophene, 2,7- fluorine, 2,6-naphtalene, 2,7-phenanthrene optionally being substituted by one or more identical or different groups L,

$Z^{D21}$ and $Z^{D22}$ are in each occurrence independently from each other, -O-, -S-, -CO-, -COO-, -OCO-, -S-CO-, -CO-S-, -O-COO-, $-CO-NR^{01}-$, $-NR^{01}-CO-$, $-NR^{01}-CO-NR^{02}$, $-NR^{01}-CO-O-$, $-O-CO-NR^{01}-$, $-OCH_2-$, $-CH_2O-$, $-SCH_2-$, $-CH_2S-$, $-CF_2O-$, -OCF2-, -CF2S-, -SCF2-, $-CH_2CH_2-$, $-(CH2)_4-$, $-CF_2CH_2-$, $-CH_2CF_2-$, $-CF_2CF_2-$, -CH=N-, -N=CH-, -N=N-, $-CH=CR^{01}-$, $-CY^{01}=CY^{02}-$, -C≡C-, -CH=CH-COO-, -OCO-CH=CH-, or a single bond, preferably -COO-, -OCO-, -CO-O-, -O-CO-, $-OCH_2-$, $-CH_2O-$, -, $-CH_2CH_2-$, $-(CH2)_4-$, $-CF_2CH_2-$, $-\ CH_2CF_2-$, $-CF_2CF_2-$, -C≡C-, -CH=CH-COO-, -OCO-CH=CH-, or a single bond,

L is in each occurrence independently of each other F or Cl,

$R^0$ is H, alkyl, alkoxy, thioalkyl, alkylcarbonyl, alkoxycarbonyl, alkylcarbonyloxy or alkoxycarbonyloxy with 1 to 20 C atoms more, preferably 1 to 15 C atoms which are optionally fluorinated, or is $Y^{D0}$ or P-Sp-,

$Y^0$ is F, Cl, CN, $NO_2$, $OCH_3$, OCN, SCN, optionally fluorinated alkylcarbonyl, alkoxycarbonyl, alkylcarbonyloxy or alkoxycarbonyloxy with 1 to 4 C atoms, or mono- oligo- or polyfluorinated alkyl or alkoxy with 1 to 4 C atoms, preferably F, Cl, CN, $NO_2$, $OCH_3$, or mono- oligo- or polyfluorinated alkyl or alkoxy with 1 to 4 C atoms

$Y^{01}$ and $Y^{02}$ each, independently of one another, denote H, F, Cl or CN,

$R^{01}$ and $R^{02}$ have each and independently the meaning as defined above $R^0$, and

k and l are each and independently 0, 1, 2, 3 or 4, preferably 0, 1 or 2, most preferably 1.

More preferred polymerisable mono-, di-, or multireactive liquid crystalline compounds are disclosed for example in WO 93/22397, EP 0 261 712, DE 195 04 224, WO 95/22586, WO 97/00600, US 5,518,652, US 5,750,051, US 5,770,107 and US 6,514,578.

In another preferred embodiment of the invention, the polymerisable compounds of the formulae I* and II* and sub-formulae thereof contain, instead of one or more radicals P-Sp-, one or more branched radicals containing two or more polymerisable groups P (multifunctional polymerisable radicals). Suitable radicals of this type, and polymerisable compounds containing them, are described, for example, in US 7,060,200 B1 or US 2006/0172090 A1. Particular preference is given to multifunctional polymerisable radicals selected from the following formulae:

$-X\text{-alkyl-}CHP^1-CH_2-CH_2P^2$ I*a

$-X\text{-alkyl-}C(CH_2P^1)(CH_2P^2)-CH_2P^3$ I*b

$-X\text{-alkyl-}CHP^1CHP^2-CH_2P^3$ I*c

$-X\text{-alkyl-}C(CH_2P^1)(CH_2P^2)-C_{aa}H_{2aa+1}$ I*d

$-X\text{-alkyl-}CHP^1-CH_2P^2$ I*e

$-X\text{-alkyl-}CHP^1P^2$ I*f

$-X\text{-alkyl-}CP^1P^2-C_{aa}H_{2aa+1}$ I*g

$$-X\text{-alkyl-}C(CH_2P^1)(CH_2P^2)\text{-}CH_2OCH_2\text{-}C(CH_2P^3)(CH_2P^4)CH_2P^5 \qquad I^*h$$

$$-X\text{-alkyl-}CH((CH_2)_{aa}P^1)((CH_2)_{bb}P^2) \qquad I^*i$$

$$-X\text{-alkyl-}CHP^1CHP^2\text{-}C_{aa}H_{2aa+1} \qquad I^*k$$

in which

alkyl denotes a single bond or straight-chain or branched alkylene having 1 to 12 C atoms, in which one or more non-adjacent $CH_2$ groups may each be replaced, independently of one another, by $-C(R^x)=C(R^x)-$, -C≡C-, $-N(R^x)-$, -O-, -S-, -CO-, -CO-O-, -O-CO-, -O-CO-O- in such a way that O and/or S atoms are not linked directly to one another, and in which, in addition, one or more H atoms may be replaced by F, Cl or CN, where $R^x$ has the above-mentioned meaning and preferably denotes $R^0$ as defined above,

aa and bb each, independently of one another, denote 0, 1, 2, 3, 4, 5 or 6,

X has one of the meanings indicated for X', and

$P^{1-5}$ each, independently of one another, have one of the meanings indicated above for P.

Further preferred polymerisable mono-, di-, or multireactive liquid crystalline compounds are shown in the following list:

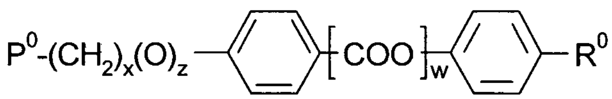

D-1

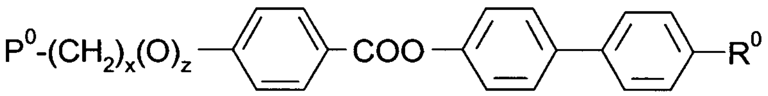

D-2

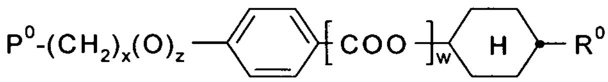

D-3

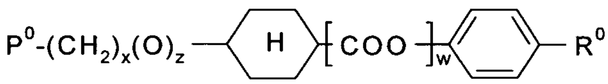

D-4

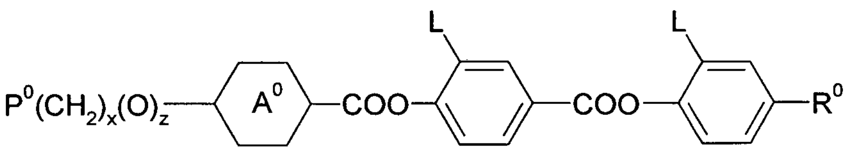

D-5

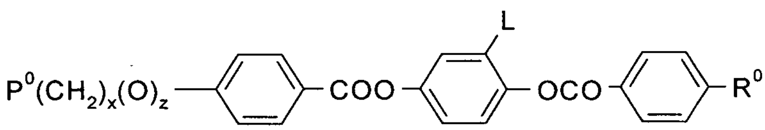

D-6

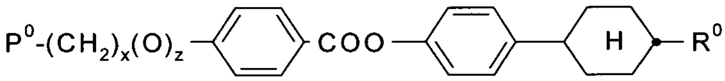

D-7

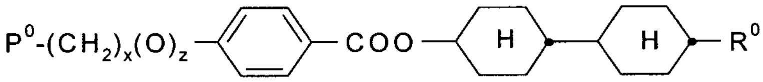

D-8

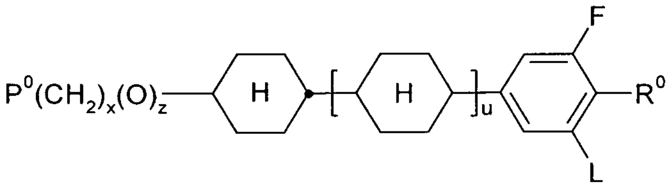

D-9

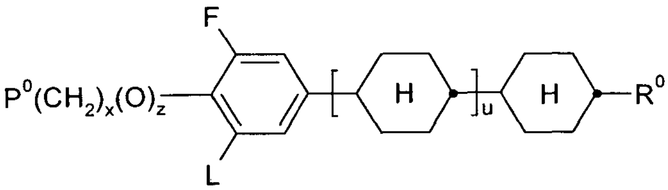

D-10

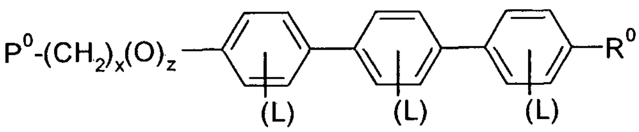

D-11

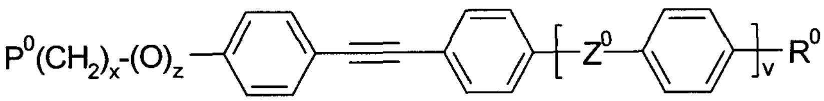

D-12

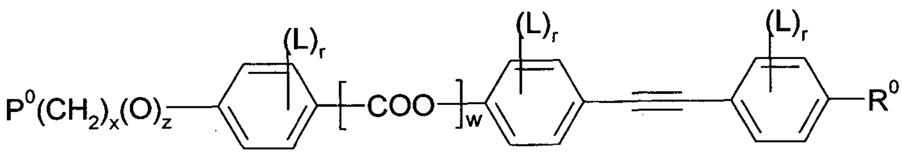

D-13

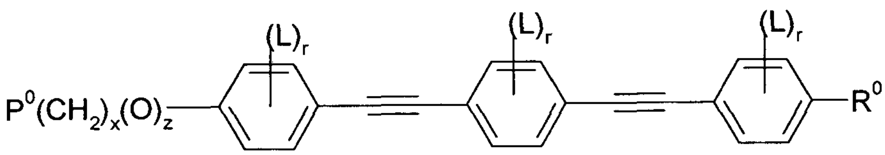

D-14

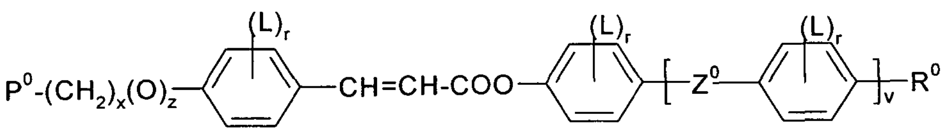

D-15

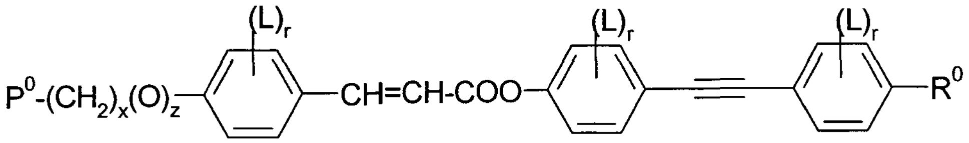
D-16

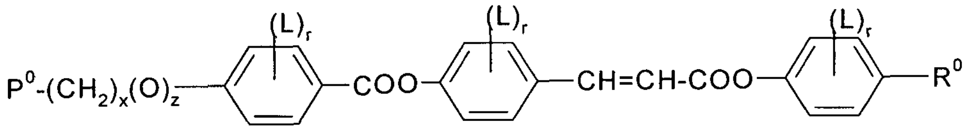
D-17

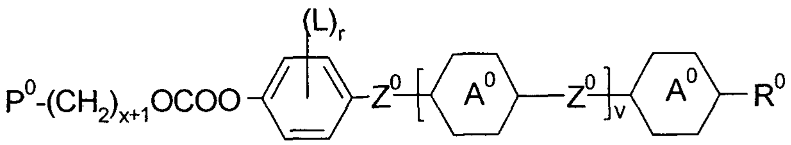
D-18

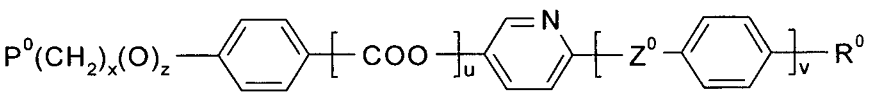
D-19

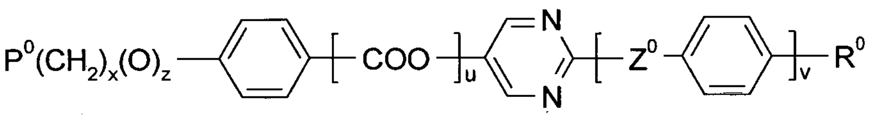
D-20

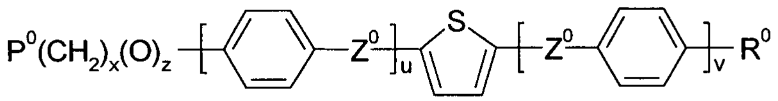
D-21

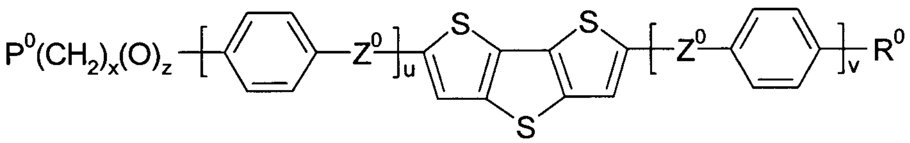
D-22

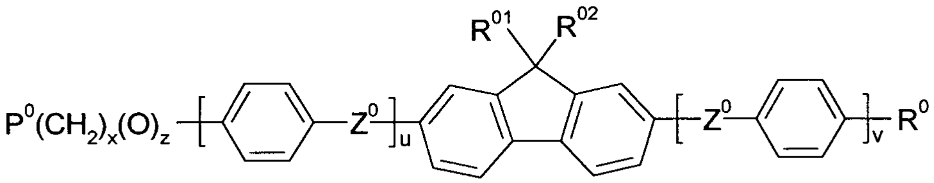
D-23

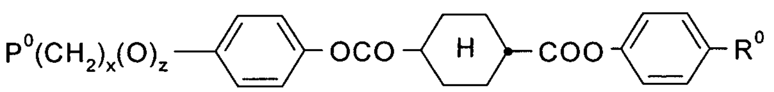
D-24

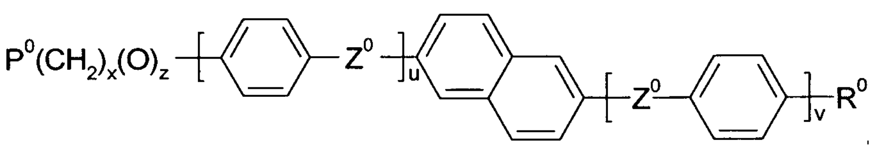
D-25

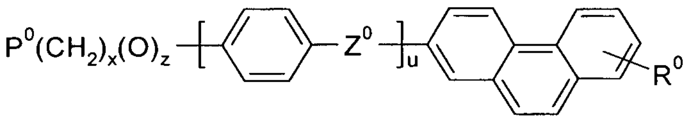

D-26

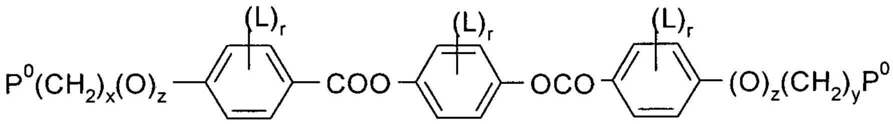

D-27

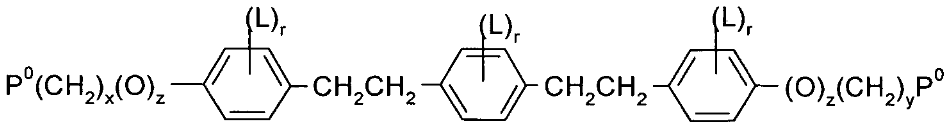

D-28

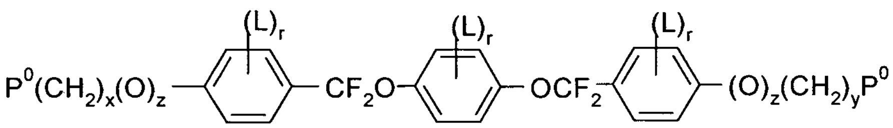

D-29

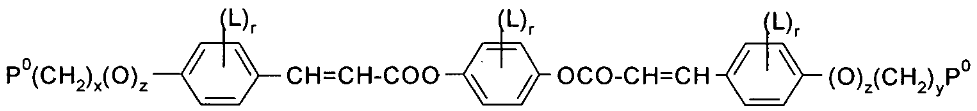

D-30

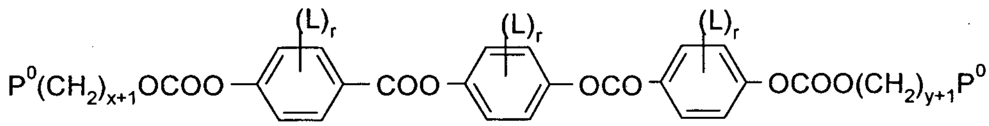

D-31

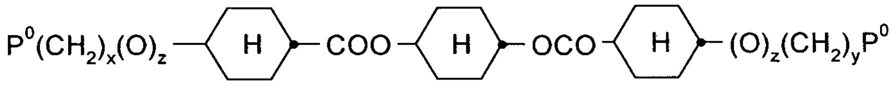

D-32

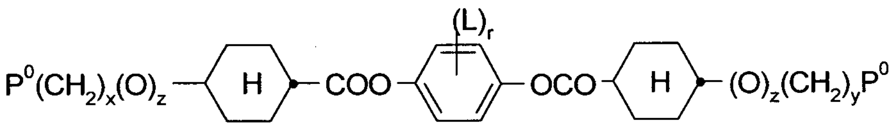

D-33

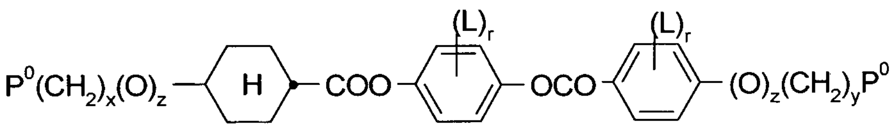

D-34

wherein

$P^0$ is, in case of multiple occurrences independently of one another, a polymerisable group, preferably an acryl, methacryl, oxetane, epoxy, vinyl, vinyloxy, propenyl ether or styrene group,

$A^0$ is, in case of multiple occurrence independently of one another, 1,4-phenylene that is optionally substituted with 1, 2, 3 or 4 groups L, or trans-1,4-cyclohexylene,

$Z^0$ is, in case of multiple occurrence independently of one another, -COO-, -OCO-, $-CH_2CH_2-$, -C≡C-, -CH=CH-, -CH=CH-COO-, -OCO-CH=CH- or a single bond,

r is 0, 1, 2, 3 or 4, preferably 0, 1 or 2,

t is, in case of multiple occurrence independently of one another, 0, 1, 2 or 3,

u and v are independently of each other 0, 1 or 2,

w is 0 or 1,

x and y are independently of each other 0 or identical or different integers from 1 to 12,

z is 0 or 1, with z being 0 if the adjacent x or y is 0,

in addition, wherein the benzene and naphthalene rings can additionally be substituted with one or more identical or different groups L and the parameter $R^0$, $Y^0$, $R^{01}$, $R^{02}$ and L have the same meanings as given above in formula D.

Especially preferred polymerisable mono-, di-, or multireactive liquid crystalline compounds are selected from Table F.

The polymerisable compounds are polymerised or cross-linked (if a compound contains two or more polymerisable groups) by in-situ polymerisation in the LC medium between the substrates of the LC display. Suitable and preferred polymerisation methods are, for example, thermal or photopolymerisation, preferably photopolymerisation, in particular UV photopolymerisation. If necessary, one or more initiators may also be added here. Suitable conditions for the polymerisation, and suitable types and amounts of initiators, are known to the person skilled in the art and are described in the literature. Suitable for free-radical polymerisation are, for example, the commercially available photoinitiators Irgacure651®, Irgacure184®, Irgacure907®, Irgacure369® or Darocure1173® (Ciba AG). If an initiator is employed, its proportion in the mixture as a whole is preferably 0.001 to 5% by weight, particularly preferably 0.001 to 1% by weight. However, the polymerisation can also take place without addition of an initiator. In a further preferred embodiment, the LC medium does not comprise a polymerisation initiator.

The polymerisable component of the cholesteric liquid-crystalline medium may also comprise one or more stabilisers in order to prevent undesired spontaneous polymerisation of the RMs, for example during storage or transport. Suitable types and amounts of stabilisers are known to the person skilled in the art and are described in the literature. Particularly suitable are, for example, the commercially available stabilisers of the Irganox® series (Ciba AG). If stabilisers are employed, their proportion, based on the total amount of RMs or polymerisable compounds, is preferably 10 - 5000 ppm, particularly preferably 50 - 1000 ppm.

The above-mentioned polymerisable compounds are also suitable for polymerisation without initiator, which is associated with considerable advantages, such as, for example, lower material costs and in particular less contamination of the LC medium by possible residual amounts of the initiator or degradation products thereof.

The polymerisable compounds can be added individually to the cholesteric liquid-crystalline medium, but it is also possible to use mixtures comprising two or more polymerisable compounds. On polymerisation of mixtures of this type, copolymers are formed. The invention furthermore relates to the polymerisable mixtures mentioned above and below.

The cholesteric liquid crystalline media may contain further additives like for example further stabilizers, inhibitors, chain-transfer agents, co-reacting monomers, surface-active compounds, lubricating agents, wetting agents, dispersing agents, hydrophobing agents, adhesive agents, flow improvers, defoaming agents, deaerators, diluents, reactive diluents, auxiliaries, colourants, dyes, pigments or nanoparticles in usual concentrations.

The total concentration of these further constituents is in the range of 0.1 % to 10 %, preferably 0.1 % to 6 %, based on the total mixture. The concentrations of the individual compounds used each are preferably in the range of 0.1 % to 3 %. The concentration of these and of similar additives is not taken into consideration for the values and ranges of the concentrations of the liquid crystal components and compounds of the cholesteric liquid crystalline media in this application. This also holds for the concentration of the dichroic dyes used in the mixtures, which are not counted when the concentrations of the compounds respectively the components of the host medium are specified. The concentration of the respective additives is always given relative to the final doped mixture.

The liquid-crystalline medium for the privacy window according to the invention comprising the light modulation element comprises additionally one or more polymer particles.

The particles are selected as such, that they do not affect the transparency of the light modulation element comprising the cholesteric liquid crystalline medium in the planar state and improve the scattering in the focal conic state. Thus, suitable particles materials are selected in dependence of the refractive index of the utilized cholesteric liquid crystalline medium. The refractive index of the particle material differs from the refractive index of the utilized cholesteric liquid crystalline medium in a from - 0.25 to +0.25, preferably from -0.1 to +0.1.

It is a matter of routine skill to approximately match the appropriate refractive index ($n_{av}$) of the cholesteric liquid crystalline medium with the refractive index of the particle material.

Suitable particle materials are selected, for example, from polystyrene ($n \approx 1.59$), reactive mesogens or mixtures

comprising one or more reactive mesogens as given under formula D; polyimides or fluorinated polyimides (n ≈1.52-1.54) such as the OPI series polyimides from the Hitachi company; fluorocarbons such as Teflon®, Teflon AF® and Cytop® (n ≈ 1.34 - 1.38), silicon polymers such as Sylgard® 184 (n ≈ 1.43); acrylic glass (n ≈ 1.49); polycarbonate (n ≈ 1.58) such as Makrolon®; PMMA (n ≈ 1.48); PET (n ≈ 1.57); mixtures of such polymers, as for instance disclosed in US 6,989,190 A1; flint glass (n ≈ 1.52 - 1.92) or crown glass (n ≈ 1.48 - 1.75).

The particle size of such particles is preferably in the range from 0.1 μm to 15 μm, more preferably in the range from 0.5 μm to 10 μm, and even more preferably in the range from 0.8 μm to 7μm.

The total concentration of these particles is in the range of 0.1 % to 5 %, preferably 0.3 % to 3 % and more preferably 0.5 % to 1 % based on the total mixture. The concentration of these particles is not taken into consideration for the values and ranges of the concentrations of the liquid crystal components and compounds of the cholesteric liquid crystalline media in this application.

The cholesteric liquid crystalline medium for the privacy window according to the invention comprising the light modulation element comprises

- one or more compounds of formula B-I, preferably selected from compounds of formulae B-I-1, and/or B-I-8, preferably in an amount of 10 to 50 %, more preferably 15 to 35 %, and/or
- one or more compounds of formula B-III, preferably selected from compounds of formulae B-III-1, B-III-2, B-III-4, B-III-10, and/or B-III-11, preferably in an amount of 40 to 90%, more preferably 50 to 85%, and
- optionally one or more compounds of formula B-II, and
- one or more chiral compounds having an absolute value of the helical twisting power (IHTPtotall) of 5 $\mu m^{-1}$ or more, especially preferred are chiral compounds with a HTP of 20$\mu m^{-1}$ or higher, very preferably 40 $\mu m^{-1}$ or higher, most preferably 80 $\mu m^{-1}$ or higher, and preferably selected from the compounds of formula C-1 to C-III, more preferably selected from compounds of formula C-1, preferably in an amount 0.25 to 20 %, more preferably in an amount of 0.75 to 10 %, and
- optionally one or more compounds of formula D, and
- one or more particles, preferably made of polystyrene or reactive mesogens, in the range of 0.1 % to 5 %, preferably 0.3 % to 3 %.

Preferably the cholesteric liquid crystalline medium has a nematic phase extending at least from 0 °C or less to 80 °C or more, more preferably at least from -20 °C or less to 85 °C or more, most preferably at least from - 20 °C or less to 90 °C or more and in particular at least from -30 °C or less to 95 °C or more.

The expression "has a nematic phase" here means on the one hand that no smectic phase and no crystallisation are observed at low temperatures at the corresponding temperature and on the other hand that clearing still does not occur on heating from the nematic phase. The investigation at low temperatures is carried out in a flow viscometer at the corresponding temperature and checked by storage in test cells having a layer thickness corresponding to the electro-optical use for at least 100 hours. If the storage stability at a temperature of -20°C in a corresponding test cell is 1000 h or more, the medium is referred to as stable at this temperature. At temperatures of -30°C and -40°C, the corresponding times are 500 h and 250 h respectively. At high temperatures, the clearing point is measured by conventional methods in capillaries.

The cholesteric liquid crystalline medium according to the instant invention are characterized by a clearing points of 80 °C or more, preferably of 85 °C or more, very preferably 90°C or more.

The value of the $\Delta n$ of the cholesteric liquid crystalline media according to the instant invention, at 589 nm ($Na^D$) and 20 °C, preferably is in the range of 0.100 or more to 0.350 or less, more preferably in the range of 0.120 or more to 0.250 or less and most preferably in the range of 0.125 or more to 0.220 or less.

The value of $\Delta\varepsilon$, at 1 kHz and 20 °C, of the cholesteric liquid crystalline medium according to the invention preferably is 1.0 or more, preferably 2.0 or more, more preferably 2.5 or more and most preferably 3.0 or more, whereas it preferably is 10 or less, more preferably 7 or less and more preferably it is in the range of 2.0 or more, to 7.0 or less and most preferably in the range of 4.0 to 7.0.

The value of $\varepsilon_{\perp}$, at 1 kHz and 20 °C, of the cholesteric liquid crystalline medium according to the invention preferably is 3.0 or more, preferably 4.0 or more, more preferably 5.0 or more and most preferably 6.0 or more, whereas it preferably is 10 or less, more preferably 9.0 or less and more preferably it is in the range of 5.0 or more, to 8.0 or less and most preferably in the range of 6.0 to 7.5.

The value of $\Delta\varepsilon$, at 50 kHz and 20 °C, of the cholesteric liquid crystalline medium according to the invention preferably is in the range from +2.0 to - 3.0 or more, more preferably in the range from +1.0 to - 3.0 or more, even more preferably in the range from 0.0 to - 3.0 or more.

The value of $\varepsilon_{\perp}$, at 50 kHz and 20 °C, of the cholesteric liquid crystalline medium according to the invention preferably is 3.0 or more, preferably 4.0 or more, more preferably 5.0 or more and most preferably 6.0 or more, whereas it preferably is 10 or less, more preferably 9.0 or less and more preferably it is 8.0 or less.

The value of the cross-over frequency (v) of the cholesteric liquid crystalline medium according to the invention preferably is ≥ 15 kHz, more preferably ≥ 20 kHz and most preferably ≥ 25 kHz.

Preferably the nematic phase of the cholesteric liquid crystalline media without the chiral dopants extends at least from 0°C or less to 80°C or more, more preferably at least from -20 °C or less to 85°C or more, most preferably at least from -20°C or less to 100°C or more and in particular at least from p-30°C or less to 85°C or more.

Preferably, the cholesteric liquid crystalline media are characterized by a variable cholesteric pitch in the range from 60 nm to 60 μm. Preferably, the cholesteric pitch of the cholesteric liquid crystalline media are selected such, that their wavelength of reflection is outside of the range of visible light, i.e. in the in the range from of 750 nm to 1250 nm.

A typical method for the production of a light modulation element according to the invention comprises at least the following steps:

- cutting and cleaning of the substrates,
- providing the electrode structure on the substrates,
- optionally, coating of at least one alignment layer,
- assembling the cell using a UV curable adhesive,
- filling the cell with the cholesteric liquid crystalline medium comprising one or more particles,
- optionally, curing the polymerisable compounds of the cholesteric liquid crystalline medium.

The functional principle of the light modulation element according to the invention will be explained in detail below. It is noted that no restriction of the scope of the claimed invention, which is not present in the claims, is to be derived from the comments on the assumed way of functioning.

The change from transparent H or P- state to the scattering FC state of the liquid-crystalline medium can be used in order to achieve a change in the transmission of the light modulation element.

As mentioned above, the invention is not restricted to buildings, but can also be used in transport containers, for example shipping containers, or vehicles. It is particularly preferred to install the device on glass panes of windows or to use it as a component of multipane insulating glass. The light modulation element can be installed on the outside, the inside or, in the case of multipane glass, in the cavity between two glass panes, where the inside is taken to mean the side of a glass surface, which faces the interior. Preference is given to use on the inside or in the cavity between two glass panes in the case of multipane insulating glass.

The light modulation element may completely cover the respective glass surface on which it is installed or only partly cover it. In the case of complete coverage, the influence on light transmission through the glass surface is at its maximum. In the case of partial coverage, by contrast, a certain amount of light is transmitted by the glass surface through the uncovered parts, even in the state of the device with low transmission. Partial coverage can be achieved, for example, by installing the devices on the glass surface in the form of strips or certain patterns.

Unless the context clearly indicates otherwise, as used herein plural forms of the terms herein are to be construed as including the singular form and vice versa.

The parameter ranges indicated in this application all include the limit values including the maximum permissible errors as known by the expert. The different upper and lower limit values indicated for various ranges of properties in combination with one another give rise to additional preferred ranges.

Throughout this application, the following conditions and definitions apply, unless expressly stated otherwise. All concentrations are quoted in per cent by weight and relate to the respective mixture as a whole, all temperatures are quoted in degrees Celsius and all temperature differences are quoted in differential degrees. All physical properties are determined in accordance with "Merck Liquid Crystals, Physical Properties of Liquid Crystals", Status Nov. 1997, Merck KGaA, Germany, and are quoted for a temperature of 20°C, unless expressly stated otherwise. The optical anisotropy ($\Delta n$) is determined at a wavelength of 589.3 nm. The dielectric anisotropy ($\Delta\varepsilon$) is determined at a frequency of 1 kHz or if explicitly stated at a frequency 19 GHz. The threshold voltages, as well as all other electro-optical properties, are determined using test cells produced at Merck KGaA, Germany. The test cells for the determination of $\Delta\varepsilon$ have a cell thickness of approximately 20 μm. The electrode is a circular ITO electrode having an area of 1.13 $cm^2$ and a guard ring. The orientation layers are SE-1211 from Nissan Chemicals, Japan, for homeotropic orientation ($\varepsilon||$) and polyimide AL-1054 from Japan Synthetic Rubber, Japan, for homogeneous orientation ($\varepsilon_\perp$). The capacitances are determined using a Solatron 1260 frequency response analyser using a sine wave with a voltage of 0.3 $V_{rms}$. The light used in the electro-optical measurements is white light. A set-up using a commercially available DMS instrument from Autronic-Melchers, Germany, is used here.

Throughout the description and claims of this specification, the words "comprise" and "contain" and variations of the words, for example "comprising" and "comprises", mean "including but not limited to", and are not intended to (and do not) exclude other components. On the other hand, the word "comprise" also encompasses the term "consisting of" but is not limited to it.

It will be appreciated that many of the features described above, particularly of the preferred embodiments, are

inventive in their own right and not just as part of an embodiment of the present invention. Independent protection may be sought for these features in addition to, or alternative to any invention presently claimed.

It goes without saying to the person skilled in the art that the LC media may also comprise compounds in which, for example, H, N, O, Cl, F have been replaced by the corresponding isotopes.

For the present invention,

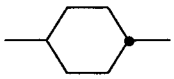, 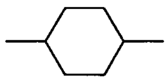, 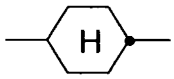 and 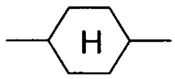

denote trans-1,4-cyclohexylene, and

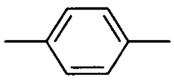 and 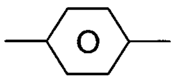

denote 1,4-phenylene.

Throughout the present application it is to be understood that the angles of the bonds at a C atom being bound to three adjacent atoms, e.g. in a C=C or C=O double bond or e.g. in a benzene ring, are 120° and that the angles of the bonds at a C atom being bound to two adjacent atoms, e.g. in a C≡C or in a C≡N triple bond or in an allylic position C=C=C are 180°, unless these angles are otherwise restricted, e.g. like being part of small rings, like 3-, 5- or 5-atomic rings, notwithstanding that in some instances in some structural formulae these angles are not represented exactly.

It will be appreciated that variations to the foregoing embodiments of the invention can be made while still falling within the scope of the invention. Alternative features serving the same, equivalent or similar purpose may replace each feature disclosed in this specification, unless stated otherwise. Thus, unless stated otherwise, each feature disclosed is one example only of a generic series of equivalent or similar features.

All of the features disclosed in this specification may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

Without further elaboration, it is believed that one skilled in the art can, using the preceding description, utilize the present invention to its fullest extent. The following examples are, therefore, to be construed as merely illustrative and not limitative of the remainder of the disclosure in any way whatsoever.

The following abbreviations are used to illustrate the liquid crystalline phase behavior of the compounds: K = crystalline; N = nematic; N2 = Twist-Bend nematic; S = smectic; Ch = cholesteric; I = isotropic; Tg = glass transition. The numbers between the symbols indicate the phase transition temperatures in °C.

In the present application and especially in the following examples, the structures of the liquid crystal compounds are represented by abbreviations, which are also called "acronyms". The transformation of the abbreviations into the corresponding structures is straightforward according to the following three tables A to C.

All groups $C_nH_{2n+1}$, $C_mH_{2m+1}$, and $C_lH_{2l+1}$ are preferably straight chain alkyl groups with n, m and l C-atoms, respectively, all groups $C_nH_{2n}$, $C_mH_{2m}$ and $C_lH_{2l}$ are preferably $(CH_2)_n$, $(CH_2)_m$ and $(CH_2)_l$, respectively and -CH=CH- preferably is *trans*- respectively *E* vinylene.

Table A lists the symbols used for the ring elements, table B those for the linking groups and table C those for the symbols for the left hand and the right hand end groups of the molecules.

Table D lists exemplary polymerisable chiral mesogenic molecular structures with their respective codes.

Table E lists exemplary non-polymerisable chiral mesogenic molecular structures with their respective codes.

Table F lists exemplary polymerisable non-chiral mesogenic molecular structures with their respective codes.

Stabilisers which can be added, for example, to the mixtures according to the invention are mentioned in Table G.

**Table A: Ring Elements**

| | | | |
|---|---|---|---|
| C | 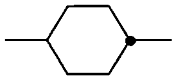 | P | 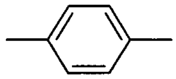 |

(continued)

| | | | |
|---|---|---|---|
| **D** | 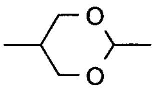 | **DI** | 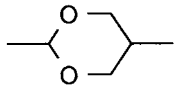 |
| **A** | 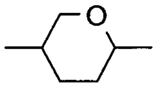 | **AI** | 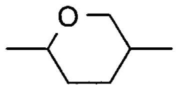 |
| **G** | 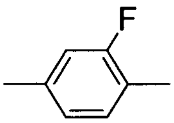 | **GI** | 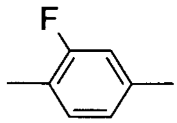 |
| **U** | 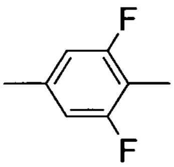 | **UI** | 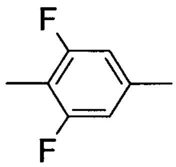 |
| **Y** | 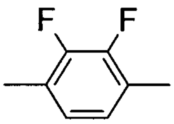 | | |
| **M** | 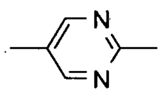 | **MI** | 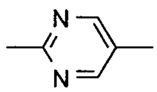 |
| **N** | 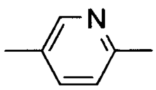 | **NI** | 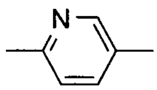 |
| **np** | 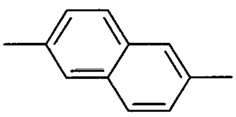 | | |
| **n3f** | 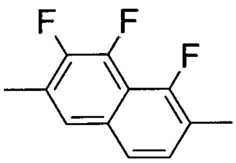 | **n3fI** | 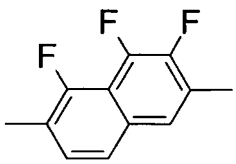 |
| **th** | 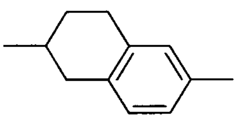 | **thI** | 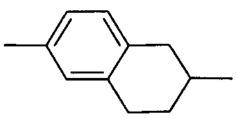 |
| **th2f** | 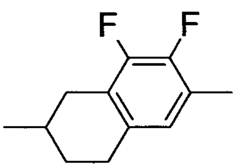 | **th2fI** | 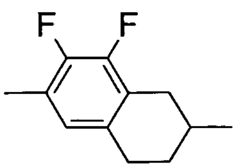 |
| **o2f** | 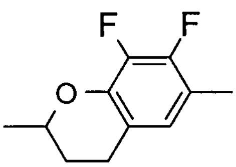 | **o2fI** | 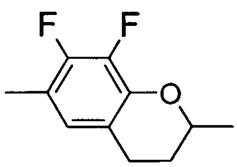 |

(continued)

| | | | |
|---|---|---|---|
| **dh** | 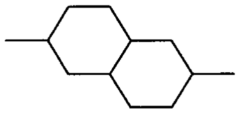 | | |
| **K** | 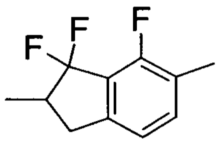 | **KI** | 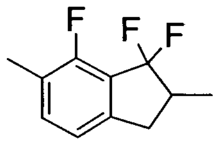 |
| **L** | 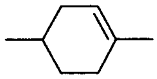 | **LI** | 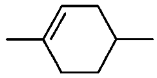 |
| **F** | 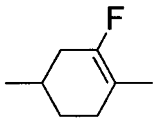 | **FI** | 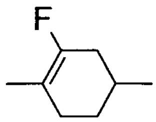 |

**Table B: Linking Groups**

| | | | |
|---|---|---|---|
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Table C: End Groups**

| Left hand side, used alone or in combination with others | | Right hand side, used alone or in combination with others | |
|---|---|---|---|
| **-n-** | $C_nH_{2n+1}-$ | **-n** | $-C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-C_nH_{2n}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O-$ | **-OM** | $-OCFH_2$ |
| **-DO-** | $CF_2HO-$ | **-OD** | $-OCF_2H$ |
| **-TO-** | $CF_3O-$ | **-OT** | $-OCF_3$ |
| **-A-** | H-C≡C- | **-A** | -C≡C-H |
| **-nA-** | $C_nH_{2n+1}-C≡C-$ | **-An** | $-C≡C-C_nH_{2n+1}$ |

(continued)

| Left hand side, used alone or in combination with others | | Right hand side, used alone or in combination with others | |
|---|---|---|---|
| **-NA-** | N≡C-C≡C- | **-AN** | -C≡C-C≡N |
| **Left hand side, used in combination with others only** | | **Right hand side, used in combination with others only** | |
| **-...n...-** | $-C_nH_{2n}-$ | **-...n...** | $-C_nH_{2n}-$ |
| **-...M...-** | -CFH- | **-...M...** | -CFH- |
| **-...D...-** | $-CF_2-$ | **-...D...** | $-CF_2-$ |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

wherein n und m each are integers and three points "..." indicate a space for other symbols of this table.

Preferably the liquid crystalline media according to the present invention comprise, besides the compound(s) of formula I one or more compounds selected from the group of compounds of the formulae of the following table.

## Table D- Polymerisable chiral compounds

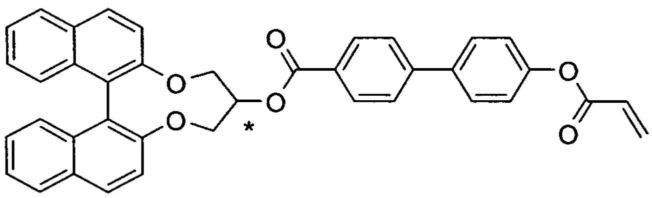

**CRM -1**

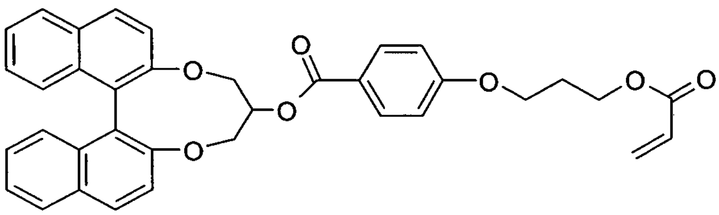

**CRM -2**

## Table E – Chiral non-polymerisable compounds

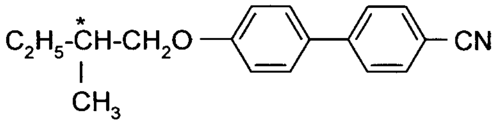

**C 15**

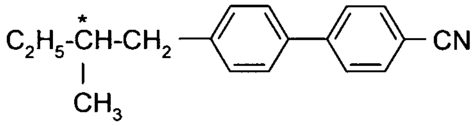

**CB 15**

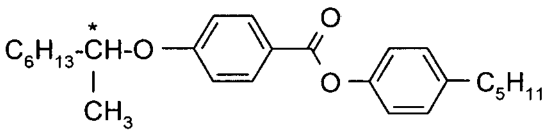

**CM 21**

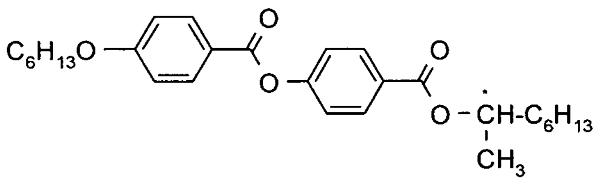

**R/S-811**

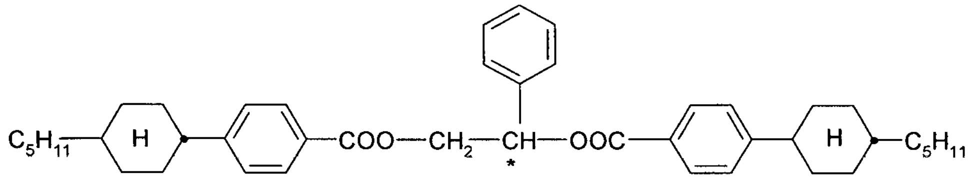

**R/S-1011**

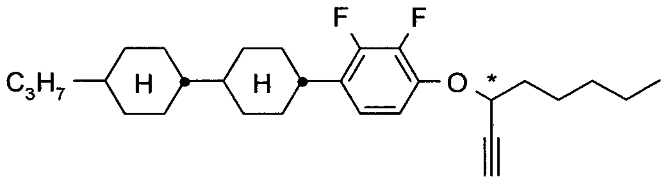

**R/S-3011**

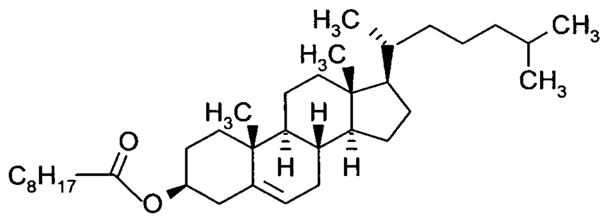

**CN**

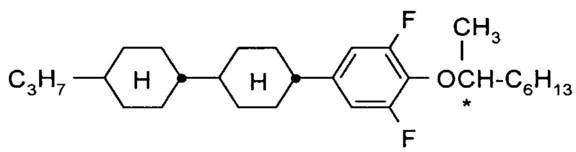

**R/S-2011**

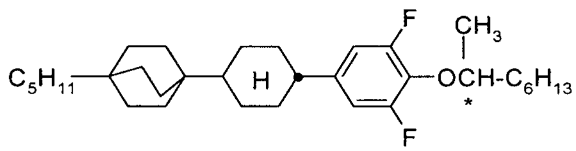

**R/S-4011**

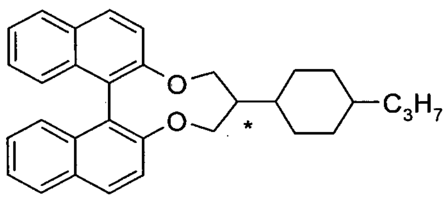

**R/S-5011**

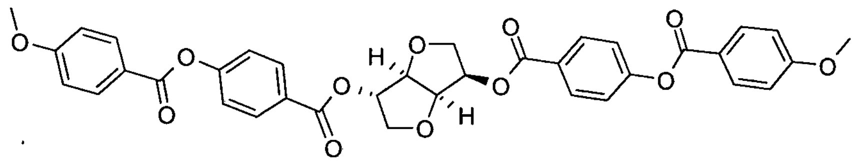

**CD-1**

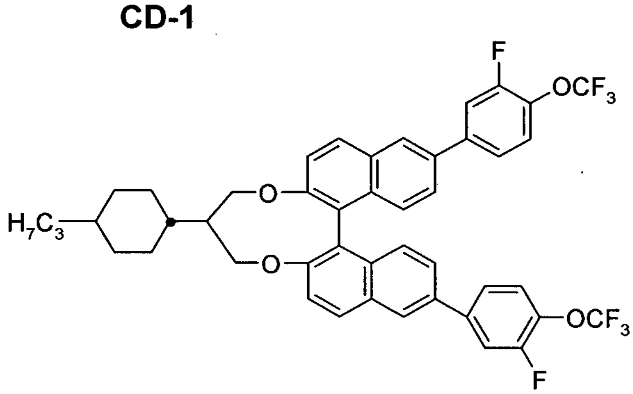

**CD-2**

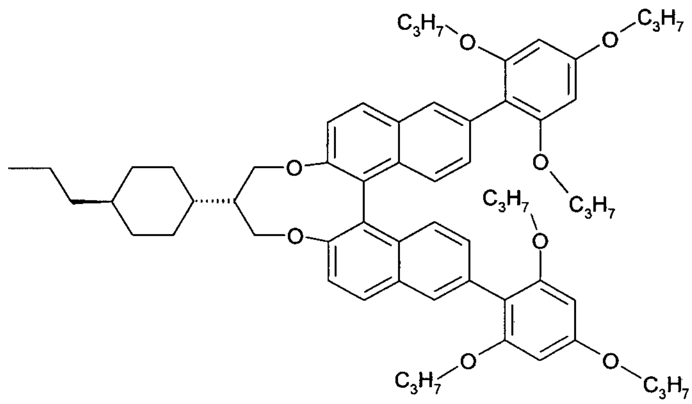

**CD-3**

**Table F**

Table F indicates possible reactive mesogens which can be used in the polymerisable component of LC media.

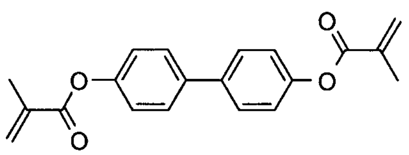

RM-1

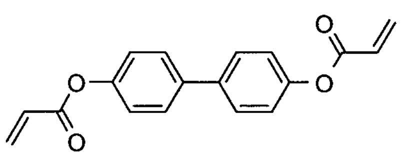

RM-2

(continued)

Table F indicates possible reactive mesogens which can be used in the polymerisable component of LC media.

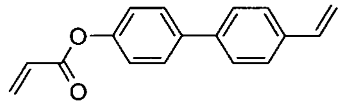
RM-3

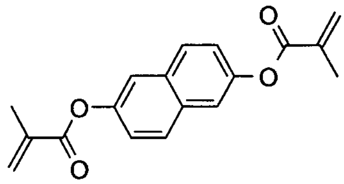
RM-4

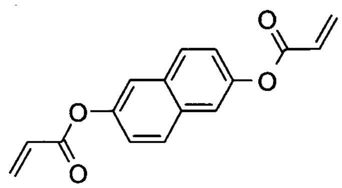
RM-5

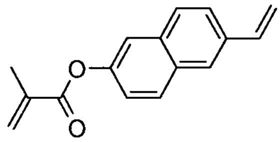
RM-6

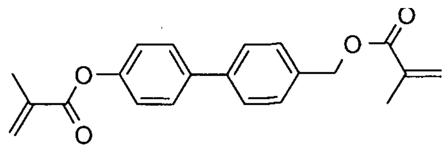
RM-7

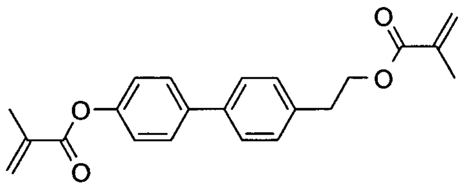
RM-8

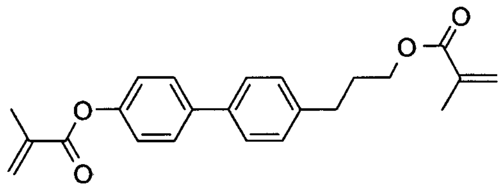
RM-9

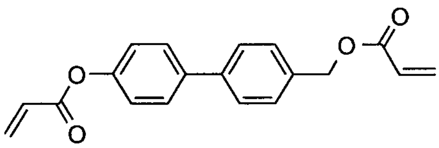
RM-10

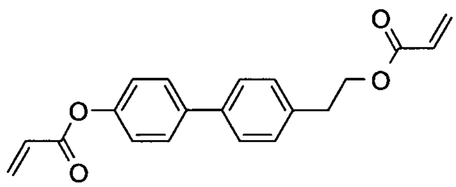
RM-11

(continued)

Table F indicates possible reactive mesogens which can be used in the polymerisable component of LC media.

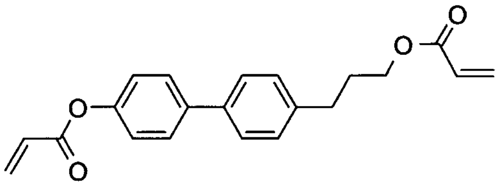
RM-12

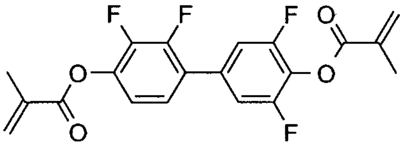
RM-13

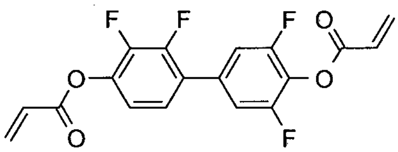
RM-14

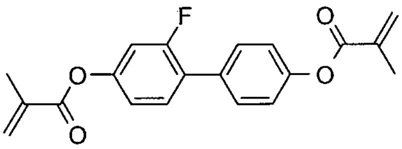
RM-15

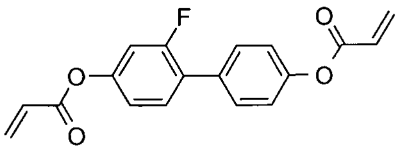
RM-16

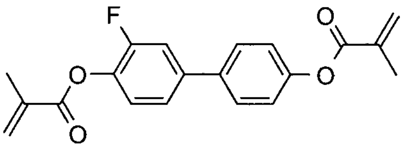
RM-17

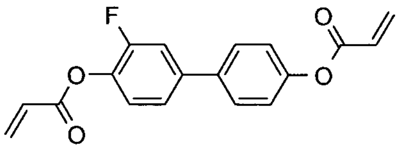
RM-18

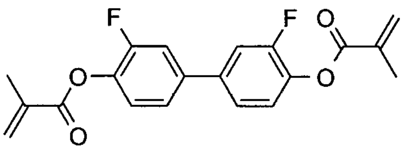
RM-19

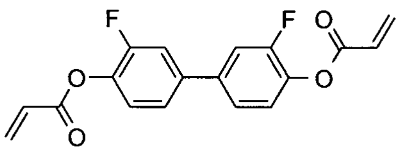
RM-20

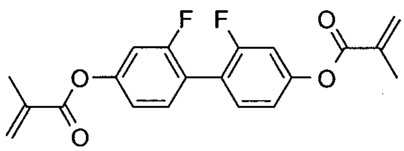
RM-21

(continued)

Table F indicates possible reactive mesogens which can be used in the polymerisable component of LC media.

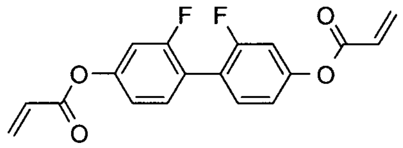

RM-22

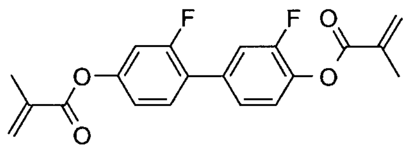

RM-23

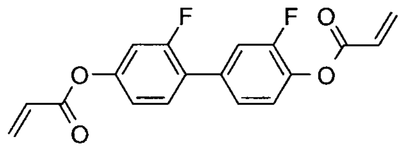

RM-24

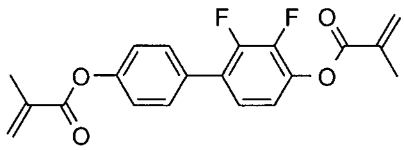

RM-25

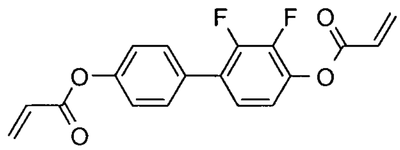

RM-26

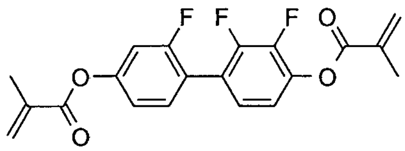

RM-27

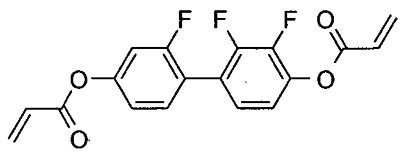

RM-28

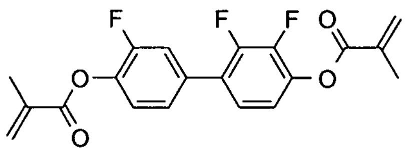

RM-29

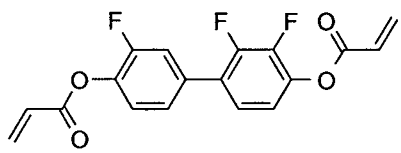

RM-30

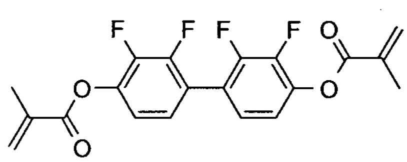

RM-31

(continued)

Table F indicates possible reactive mesogens which can be used in the polymerisable component of LC media.

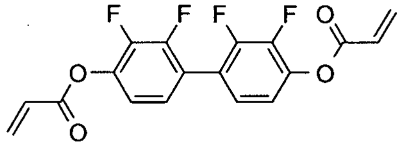

RM-32

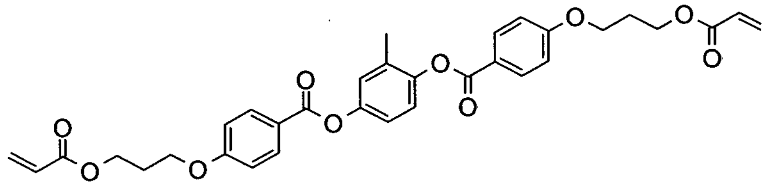

RM-33

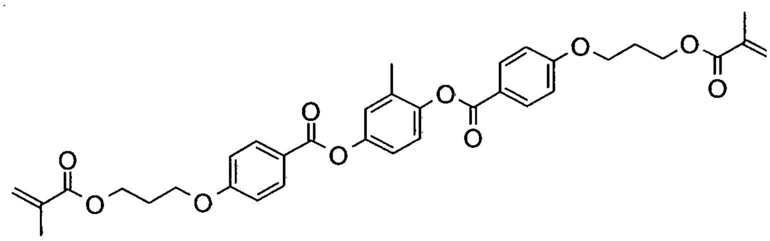

RM-34

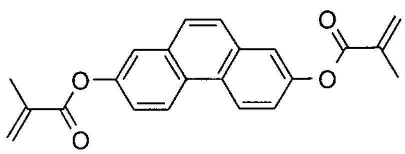

RM-35

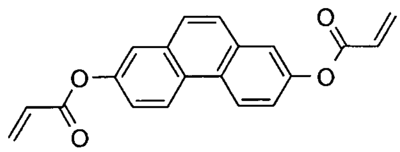

RM-36

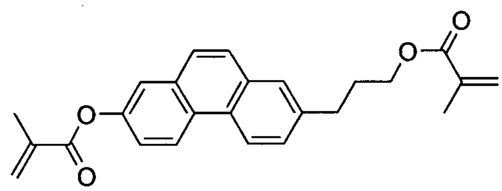

RM-37

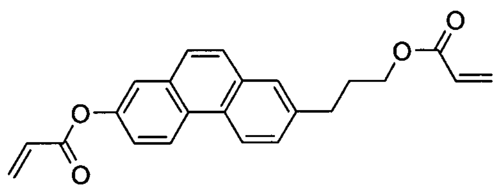

RM-38

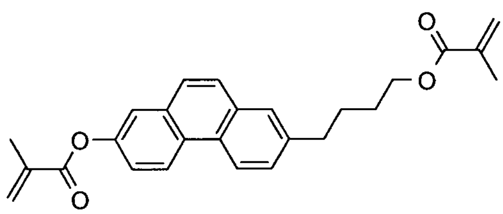

RM-39

(continued)

Table F indicates possible reactive mesogens which can be used in the polymerisable component of LC media.

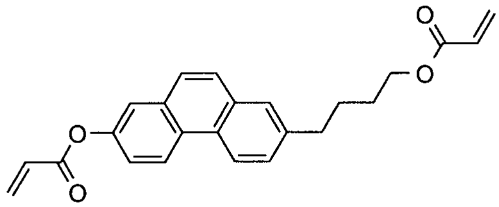

RM-40

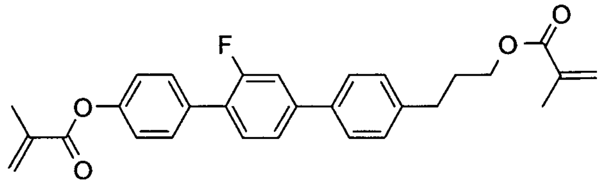

RM-41

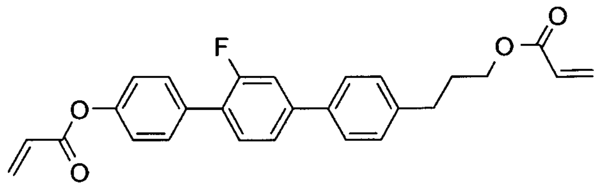

RM-42

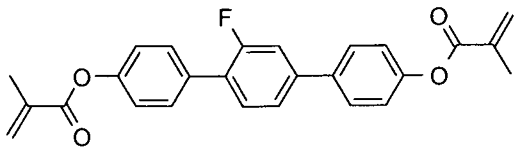

RM-43

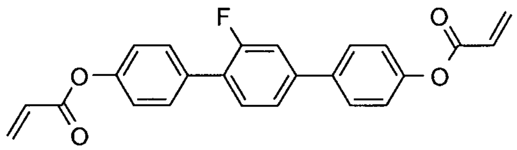

RM-44

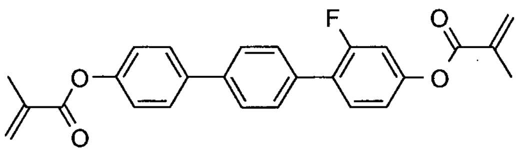

RM-45

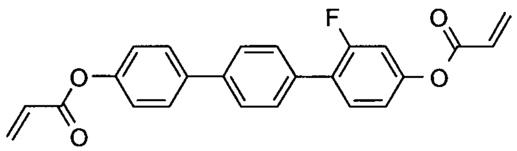

RM-46

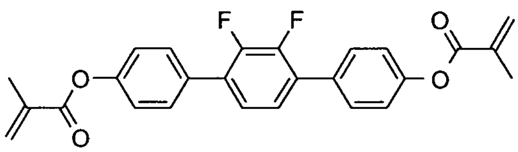

RM-47

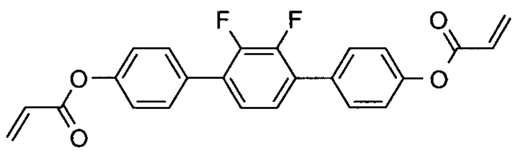

RM-48

(continued)

Table F indicates possible reactive mesogens which can be used in the polymerisable component of LC media.

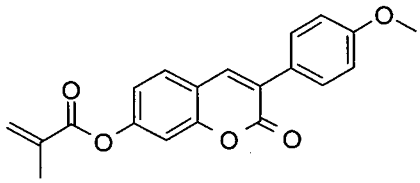

RM-49

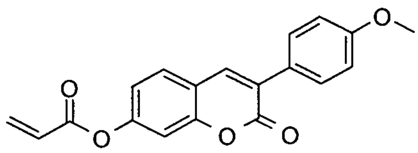

RM-50

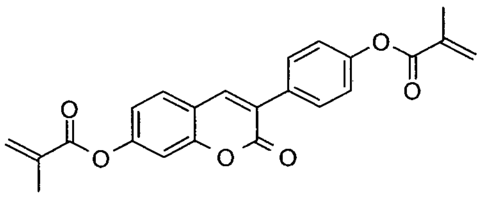

RM-51

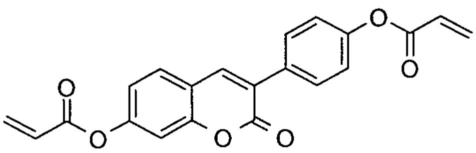

RM-52

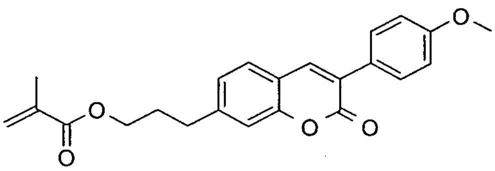

RM-53

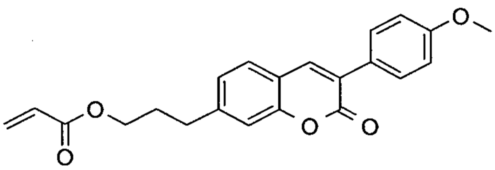

RM-54

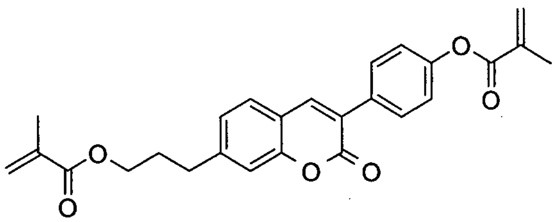

RM-55

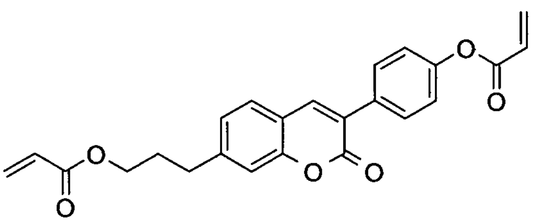

RM-56

(continued)

Table F indicates possible reactive mesogens which can be used in the polymerisable component of LC media.

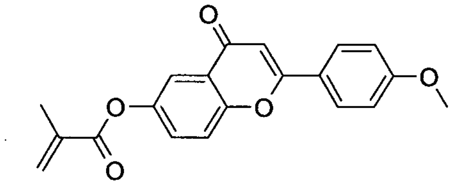

RM-57

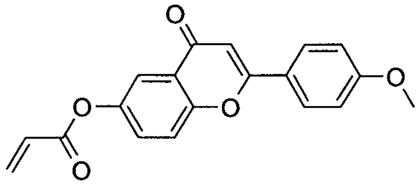

RM-58

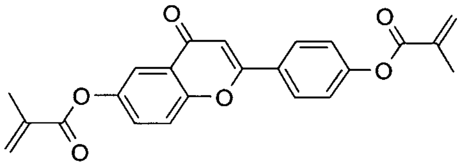

RM-59

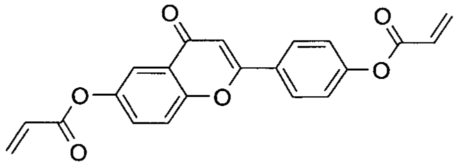

RM-60

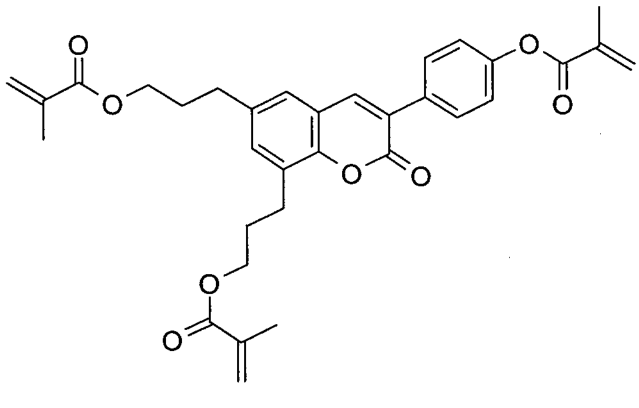

RM-61

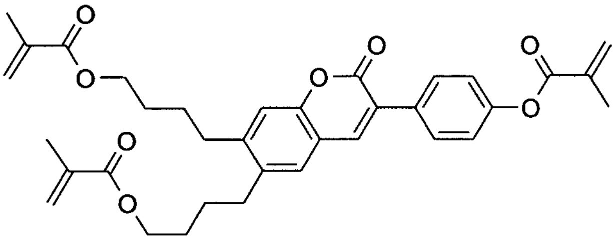

RM-62

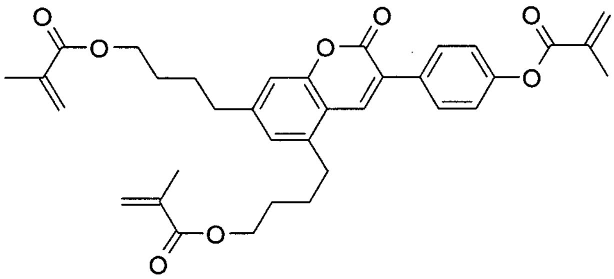

RM-63

(continued)

Table F indicates possible reactive mesogens which can be used in the polymerisable component of LC media.

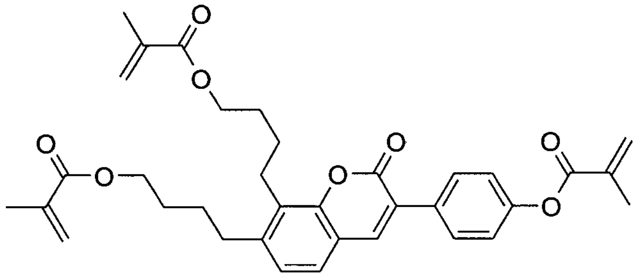

RM-64

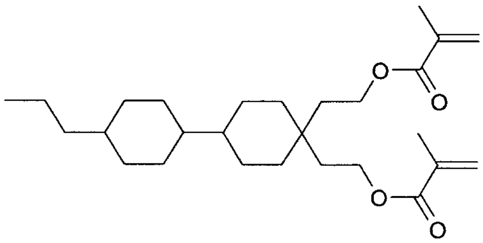

RM-65

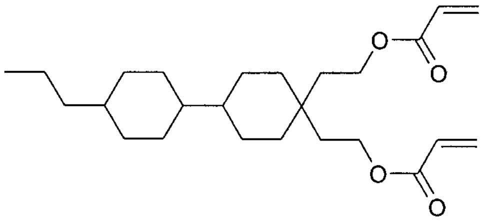

RM-66

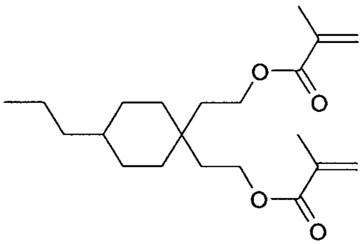

RM-67

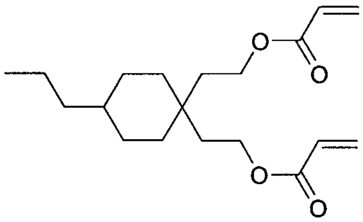

RM-68

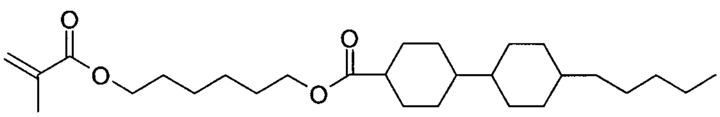

RM-69

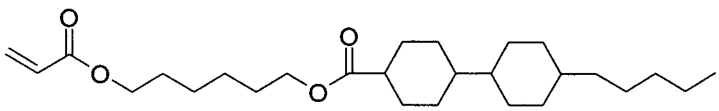

RM-70

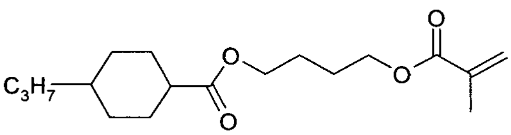

RM-71

(continued)

Table F indicates possible reactive mesogens which can be used in the polymerisable component of LC media.

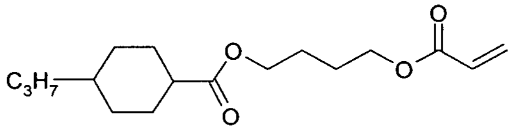

RM-72

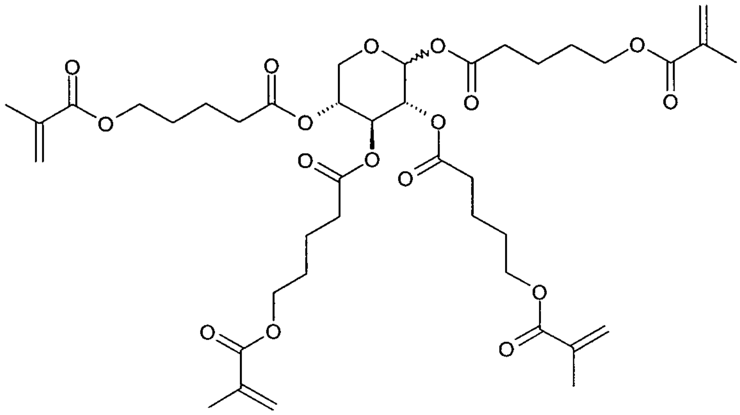

RM-73

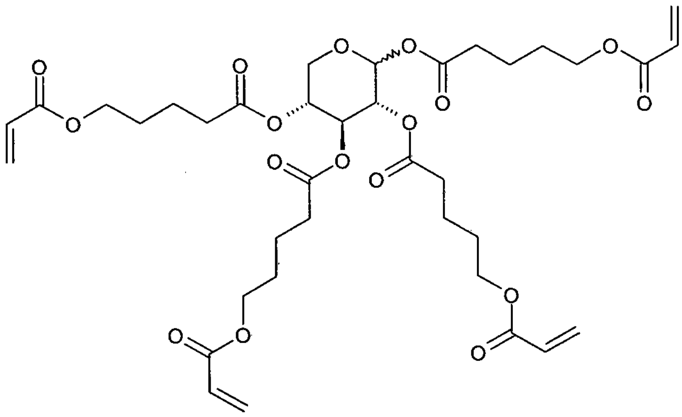

RM-74

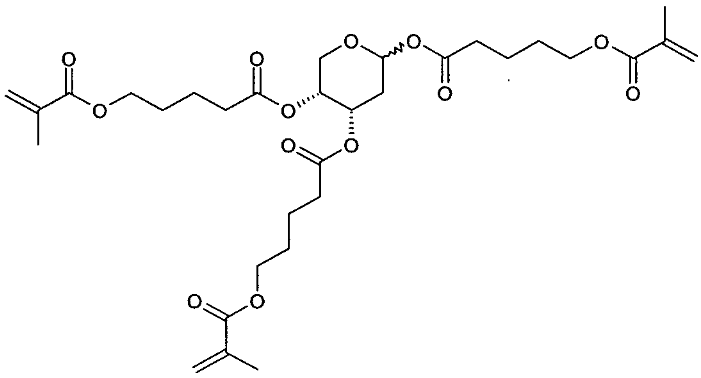

RM-75

(continued)

Table F indicates possible reactive mesogens which can be used in the polymerisable component of LC media.

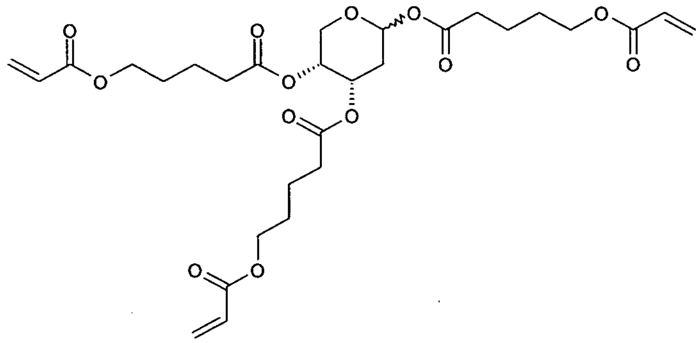

RM-76

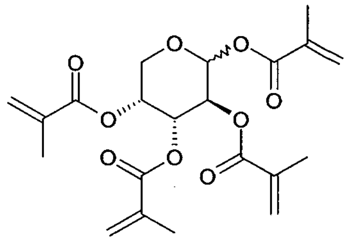

RM-77

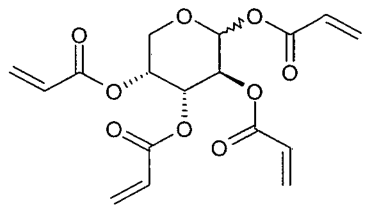

RM-78

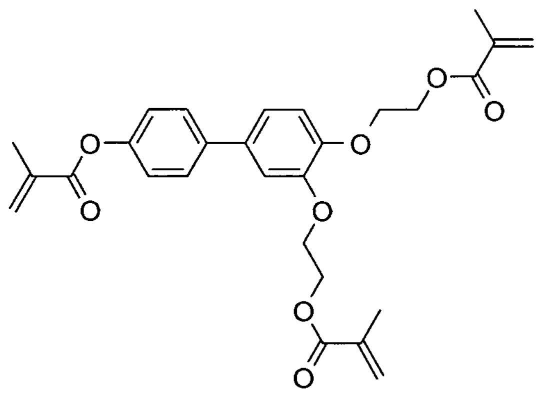

RM-79

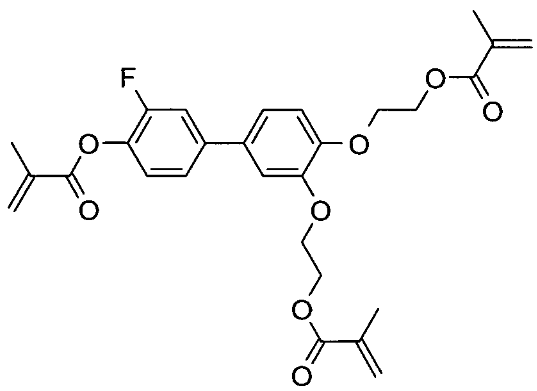

RM-80

(continued)

Table F indicates possible reactive mesogens which can be used in the polymerisable component of LC media.

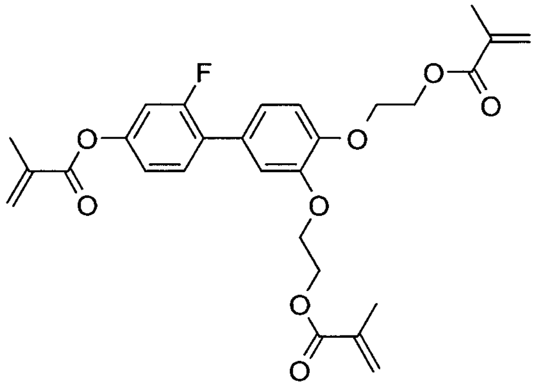

RM-81

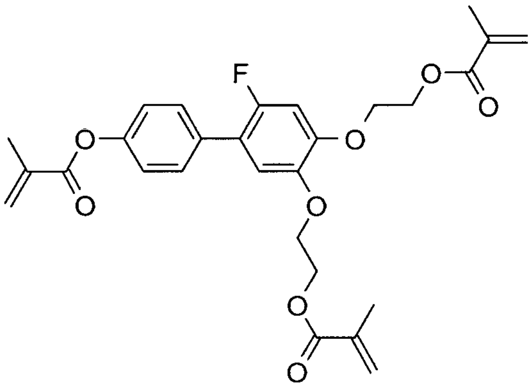

RM-82

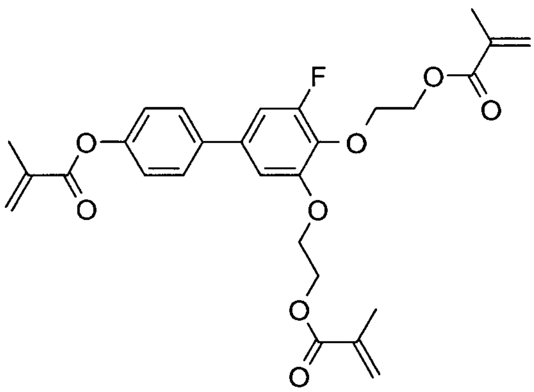

RM-83

The LC media preferably comprise one or more reactive mesogens selected from the group consisting of compounds from Table F.

## Table G

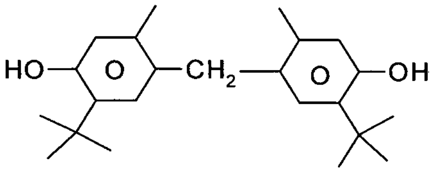

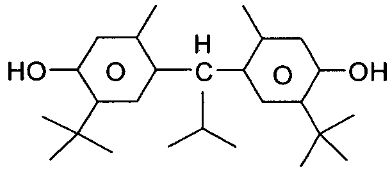

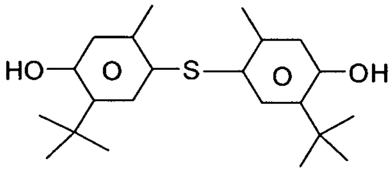

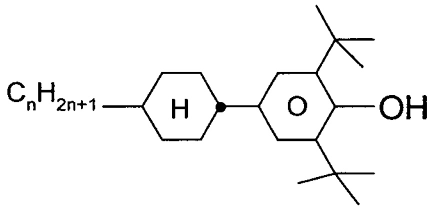

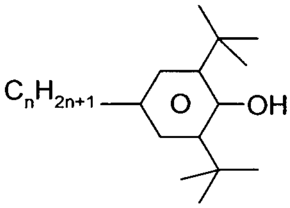

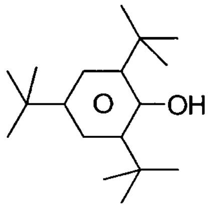

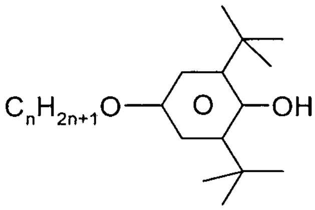

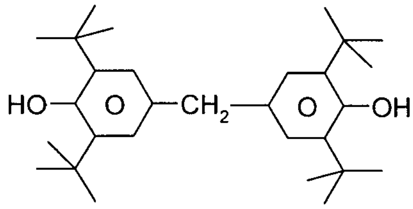

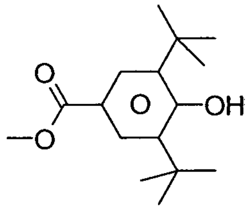

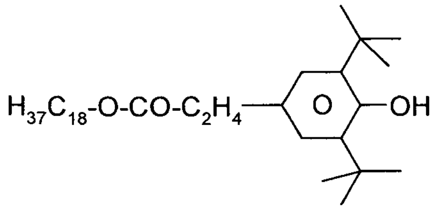

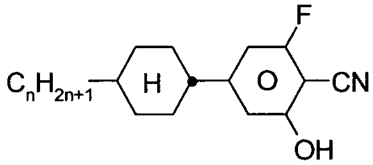

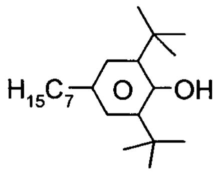

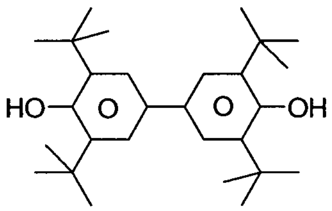

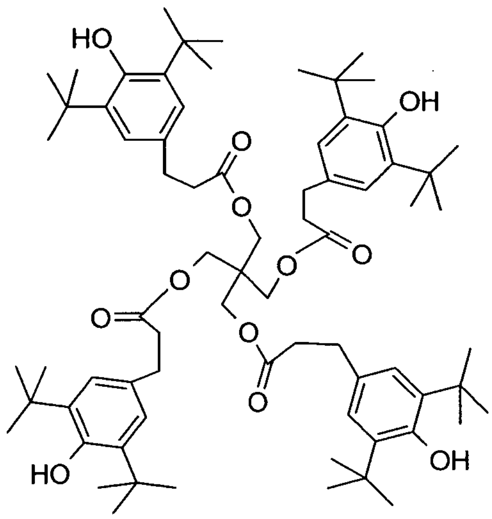

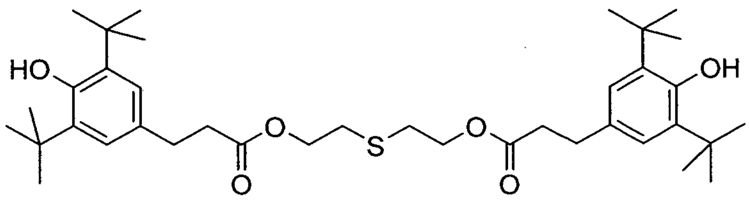

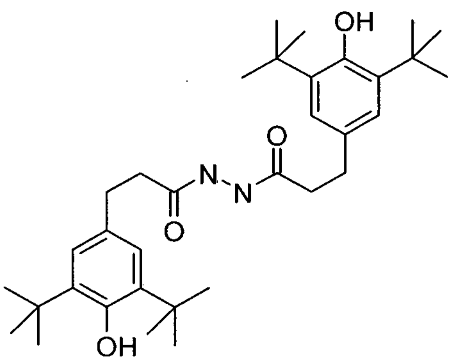

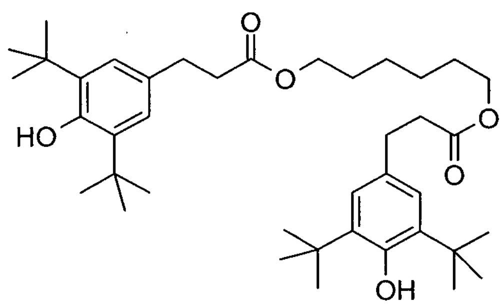

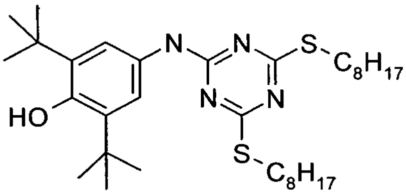

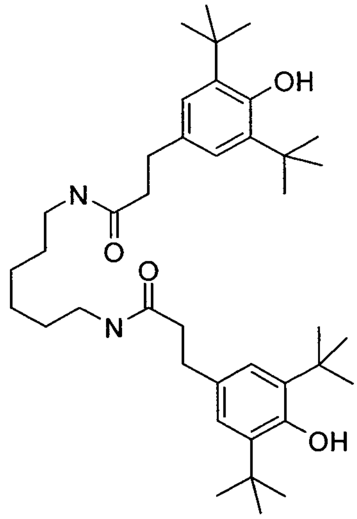

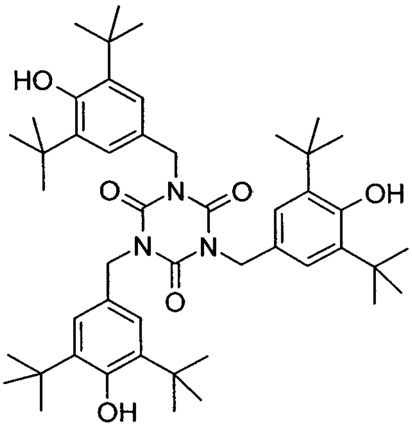

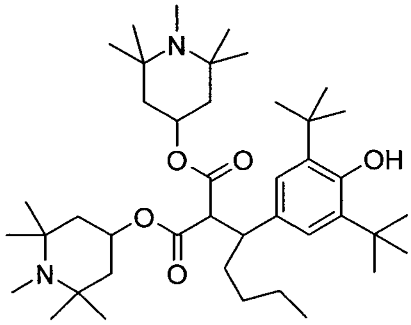

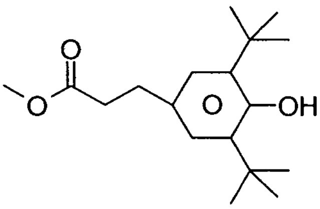

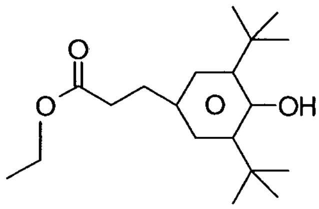

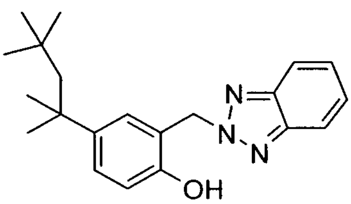

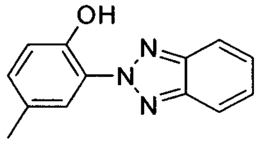

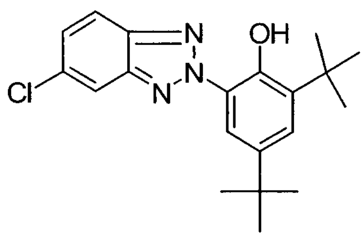

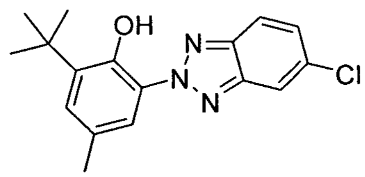

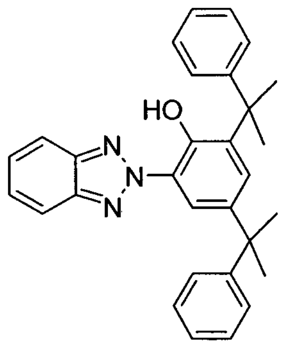

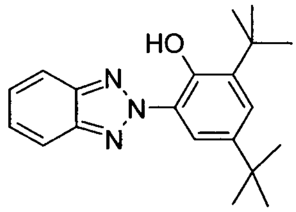

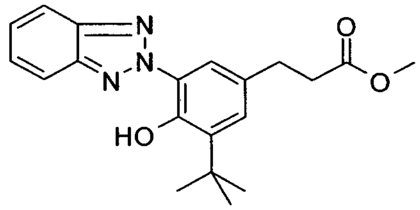

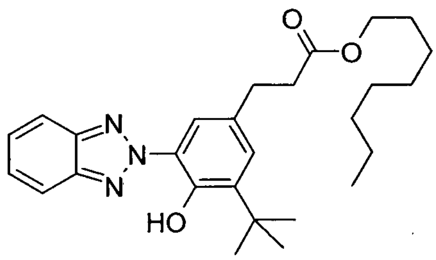

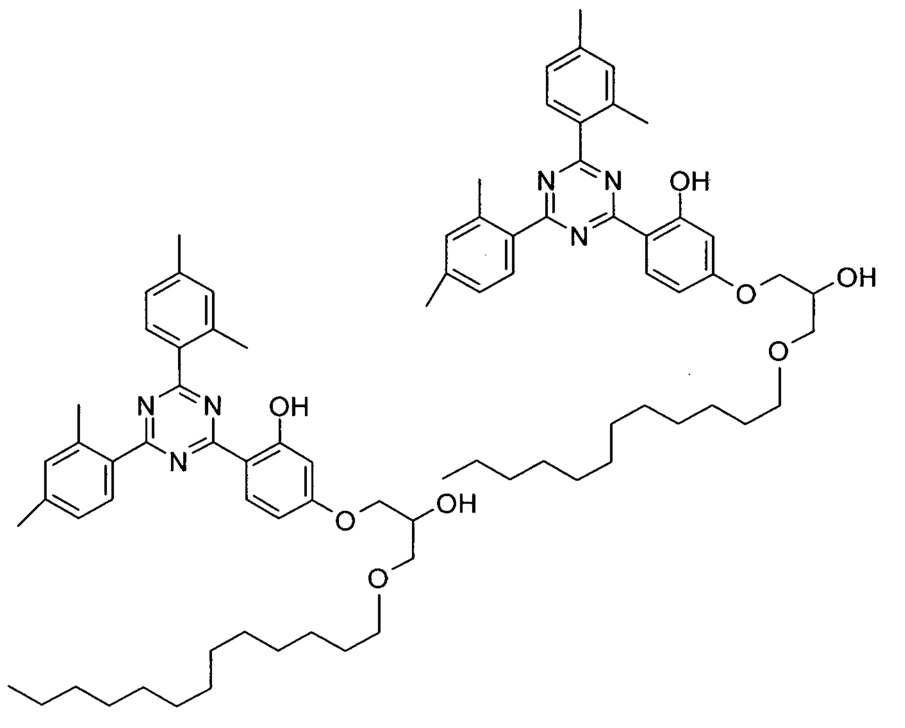

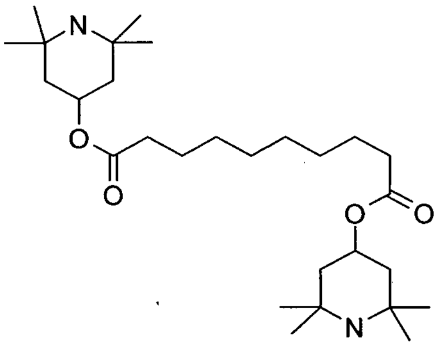

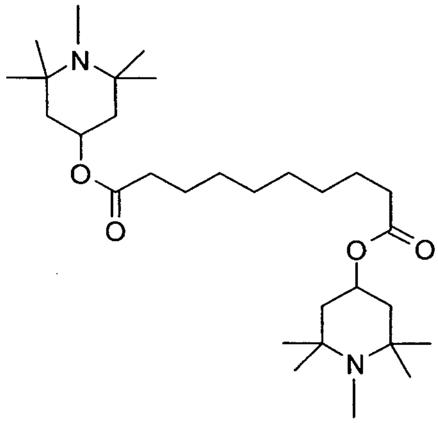

especially

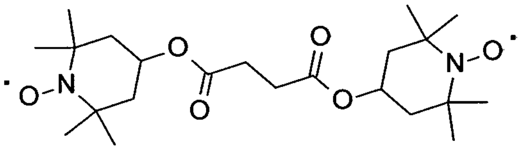

Stab 1

AND Enantiomer

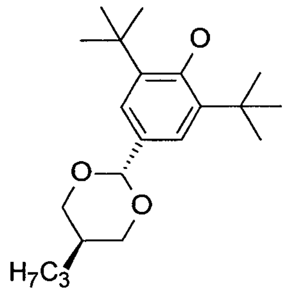

Stab 2

## Examples

The examples given in the following are illustrating the present invention without limiting it in any way.

However, the physical properties and compositions illustrate for the expert, which properties can be achieved and in which ranges they can be modified. Especially the combination of the various properties, which can be preferably achieved, is thus well defined for the expert.

Liquid crystal mixtures are realized with the compositions and properties given in the following tables. Their optical performance is investigated. Especially their reflection spectra are recorded.

## Test Cells

Cell information:

| | Cell with PI - Cell 1 | Cell w/o PI - Cell 2 |
|---|---|---|
| Substrate | glass | Glass |
| Alignment layer material | homeotropic type | |
| Alignment thickness | 60±20 nm | |
| Rubbing direction | No rubbing | |
| Cell gap | 15 μm | 15 μm |
| Electrode structure | Full ITO | Full ITO |

Working examples

**Working Examples**

The following LC mixture D-0 is prepared.

Composition and Properties of Liquid Crystal Mixture D-0

| Composition | | | Physical Properties | | | |
|---|---|---|---|---|---|---|
| Compound | | | T(N,I) | = | 90.2 | °C |
| No. | Abbreviation | Conc. /% | | | | |
| 1 | CPY-2-O2 | 7.88 | $n_e$ (20 °C, 589.3 nm) | = | 1.6949 | |
| 2 | CPY-3-O2 | 9.85 | $n_o$ (20 °C, 589.3 nm) | = | 1.5072 | |
| 3 | CPZG-5-N | 19.69 | $\Delta n$ (20 °C, 589.3 nm) | = | 0.1877 | |
| 4 | CP-3-O1 | 9.85 | $n_{av}$ (20 °C, 589.3 nm) | = | 1.6011 | |
| 5 | CP-3-O2 | 9.85 | $\varepsilon\|$(20 °C, 1 kHz) | = | 13.26 | |
| 6 | PTP-3-O1 | 7.88 | $\varepsilon_\perp$ (20 °C, 1 kHz) | = | 6.8 | |
| 7 | PTP-3-O2 | 7.88 | $\Delta\varepsilon$ (20 °C, 1 kHz) | = | 6.46 | |
| 8 | PY-4-O2 | 9.85 | $\varepsilon\|$(20 °C, 50 kHz) | = | 4.92 | |
| 9 | PYP-2-3 | 7.88 | $\varepsilon_\perp$ (20 °C, 50 kHz) | = | 6.79 | |
| 10 | PYP-2-4 | 7.88 | $\Delta\varepsilon$ (20 °C, 50 kHz) | = | -1.86 | |
| 11 | R-5011 | 1.49 | $\nu$ | > | 27 kHz | |
| 12 | Stab 2 | 0.040 | | | | |
| 13 | Stab 1 | 0.015 | | | | |
| $\Sigma$ | | 100.0 | | | | |

**Working Example 1-1**

RM particles (5±2 μm)

The following RM composition is prepared:

| **Compound** | **Conc. in %** |
|---|---|
| 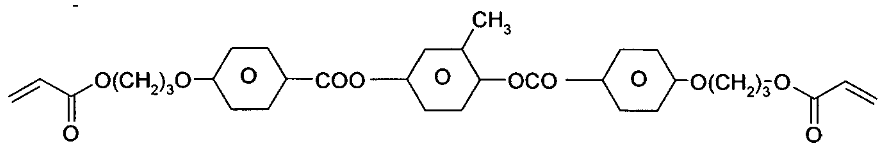 | 73.06 |
| 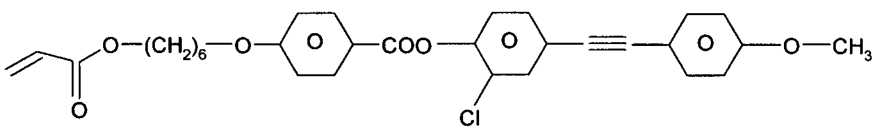 | 19.44 |
| 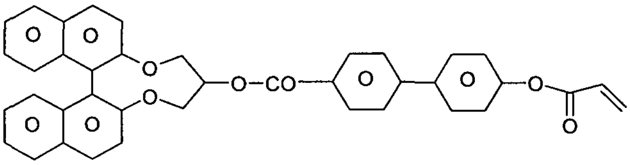 | 1.61 |
| Irgacure 369 | 4.24 |
| Irganox 1076 | 1.65 |

Spherical infrared reflective "RM particles" are produced by emulsion polymerisation as described in WO 2014/169984A1.
The RM particles reflect infrared light with a maximum located at 1003 nm. The RM particle solution is diluted in ethanol. A 0.3% w/w RM particle solution is obtained from 30 μL RM particle solution and 1000 μL ethanol. To disperse particles uniformly, a shaker is utilized.
0.3 % w/w of RM particles described above are added to the mixture D-0 and the resulting mixture is filled into the cell 2 via capillarity action, then dried in an oven at 50°C for 48 hours in order to evaporate the solvent.
Starting from the transparent planar state an electric field of 50 V and 60 Hz is applied to the test cell in order to switch the cell from planar state to the stable opaque focal conic state. Then an electric field of 40 V and 50 kHz is applied to the test cell to switch the cell from opaque focal conic state to stable planer state. The direct switching is achieved by applying square wave field at low (60 Hz) and high (50 kHz) frequency.

**Working Example 1-2**

Polystyrene particles (Latex beads, (0.8 μm) solution from Sigma-Aldrich):

The latex bead suspensions are composed mainly of polymer particles and water, with small amounts of surfactant, sodium bicarbonate and potassium sulfate.
A typical latex bead contains the following:

Particles 10%
water > 69.0%
polymer 30.0%
surfactant 0.1-0.5%
Inorganic salts 0.2%.

A 0.25% polystyrene solution is obtained from 50 μL polystyrene solution with 1950 μL ethanol. The refractive index at 589 nm for polystyrene is 1.5905; and 1.602 at 486 nm.
0.25% w/w of polystyrene particles described above are added to the mixture D-0 and dried in an oven at 50 °C for 48 hours in order to evaporate the solvent. The resulting mixture is filled into the cell 2 via capillarity action.
Starting from the transparent planar state an electric field of 50 V and 60 Hz is applied to the test cell in order to switch the cell from planar state to the stable opaque focal conic state. Then an electric field of 40 V and 50 kHz is applied to the test cell to switch the cell from opaque focal conic state to stable planer state. The direct switching is achieved by applying square wave field at low (60 Hz) and high (50 kHz) frequency.

**Working Example 1-3**

3.5% w/w of the following compound

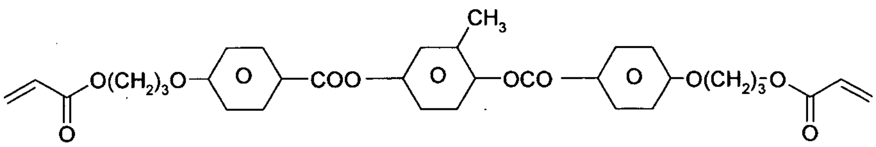

and 0.035% w/w Irgacure 651 are added to the mixture D-0. The LC mixture is heated to its isotropic phase. The cell is cured under UV light. The intensity of the radiation is 4 mW/cm$^2$ and the exposure time is 600 sec. After curing by UV, the cell is then cooled down to room temperature and filled into the cell 2 via capillarity action, then dried in an oven at 50°C for 48 hours in order to evaporate the solvent.
Starting from the transparent planar state an electric field of 50 V and 60 Hz is applied to the test cell in order to switch the cell from planar state to the stable opaque focal conic state. Then an electric field of 40 V and 50 kHz is applied to the test cell to switch the cell from opaque focal conic state to stable planer state. The direct switching is achieved by applying square wave field at low (60 Hz) and high (50 kHz) frequency.

**Comparative Example 1**

The mixture D-0 is filled into the cell 2 via capillarity action.
Starting from the transparent planar state an electric field of 50 V and 60 Hz is applied to the test cell in order

to switch the cell from planar state to the stable opaque focal conic state. Then an electric field of 40 V and 50 kHz is applied to the test cell to switch the cell from opaque focal conic state to stable planer state. The direct switching is achieved by applying square wave field at low (60 Hz) and high (50 kHz) frequency.

**Summary:**

Working example 1-2 shows the highest haze level in the focal conic state, whereas working example 1-1 exhibits a slightly lower haze level in the focal conic state, but still better than the comparative example 1. Additionally, working example 1-3 shows an improvement of the haze level in the focal conic state in comparison with the comparative example 1.

**Working example 2**

The following mixture D-1 is prepared.

Composition and Properties of Liquid Crystal Mixture D-1

| Composition | | | Physical Properties | | | |
|---|---|---|---|---|---|---|
| Compound | | | T(N,I) | = | 89.1 | °C |
| No. | Abbreviation | Conc. /% | | | | |
| 1 | CPY-2-O2 | 5.90 | $n_e$ (20 °C, 589.3 nm) | = | 1.7208 | |
| 2 | CPY-3-O2 | 7.87 | $n_o$ (20 °C, 589.3 nm) | = | 1.5130 | |
| 3 | CPZG-3-N | 4.92 | $\Delta n$ (20 °C, 589.3 nm) | = | 0.2078 | |
| 4 | CPZG-4-N | 4.92 | $n_{av}$ (20 °C, 589.3 nm) | = | 1.6169 | |
| 5 | CPZG-5-N | 9.84 | $\varepsilon_{\parallel}$(20 °C, 1 kHz) | = | 14.12 | |
| 6 | CP-3-O1 | 7.87 | $\varepsilon_{\perp}$ (20 °C, 1 kHz) | = | 7.31 | |
| 7 | PTP-3-O1 | 15.75 | $\Delta\varepsilon$ (20 °C, 1 kHz) | = | 6.81 | |
| 8 | PTP-3-O2 | 5.90 | $\varepsilon_{\parallel}$(20 °C, 50 kHz) | = | 5.55 | |
| 9 | PY-3-O2 | 7.87 | $\varepsilon_{\perp}$ (20 °C, 50 kHz) | = | 7.29 | |
| 10 | PY-4-O2 | 7.87 | $\Delta\varepsilon$ (20 °C, 50 kHz) | = | -1.74 | |
| 11 | PYP-2-3 | 11.81 | $\nu$ | > | 30 kHz | |
| 12 | PYP-2-4 | 7.87 | | | | |
| 13 | R-5011 | 1.61 | | | | |
| $\Sigma$ | | 100.0 | | | | |

0.25 % w/w of polystyrene particles described above in working example 1-2 are added to the mixture D-1 and dried in an oven at 50 °C for 48 hours in order to evaporate the solvent. The resulting mixture is filled into the cell 2 via capillarity action.

Starting from the transparent planar state an electric field of 105 V and 60 Hz is applied to the test cell in order to switch the cell from planar state to the opaque focal conic state. Then an electric field of 105V and 200 kHz is applied to the test cell to switch the cell from opaque focal conic state to planer state. The direct switching is achieved by applying square wave field at low (60Hz) and high (200 kHz) frequency.

**Comparative Example 2**

The following mixture C-1 is prepared.

Composition and Properties of Liquid Crystal Mixture C-1

| Composition | | | Physical Properties | | | |
|---|---|---|---|---|---|---|
| Comoound | | | T(N,I) | | 91 | °C |
| No. | Abbreviation | Conc. /% | | | | |
| 1 | PZG-2-N | 7.88 | $n_e$ (20 °C, 589.3 nm) | = | 1.7495 | |
| 2 | PZG-3-N | 7.88 | $n_o$ (20 °C, 589.3 nm) | = | 1.5166 | |
| 3 | PZG-4-N | 15.76 | $\Delta n$ (20 °C, 589.3 nm) | | 0.2329 | |
| 4 | PZG-5-N | 11.82 | | | | |
| 5 | CPZG-3-N | 3.94 | $\varepsilon_{\parallel}$(20 °C, 1 kHz) | = | 40.2 | |
| 6 | CPZG-4-N | 3.94 | $\varepsilon_{\perp}$ (20 °C, 1 kHz) | = | 47.9 | |
| 7 | CPZG-5-N | 1.97 | $\Delta\varepsilon$ (20 °C, 1 kHz) | = | 7.7 | |
| 8 | PTP-1-O2 | 4.93 | | | | |
| 9 | PTP-2-O1 | 4.93 | | | | |
| 10 | PTP-3-O1 | 5.91 | | | | |
| 11 | CPTP-3-1 | 3.94 | | | | |
| 12 | CPTP-3-2 | 3.94 | | | | |
| 13 | CPTP-4-1 | 3.94 | | | | |
| 14 | CPTP-3-O1 | 3.94 | | | | |
| 15 | CPTP-3-O3 | 3.94 | | | | |
| 16 | PPTUI-3-2 | 9.85 | | | | |
| 17 | R-5011 | 1.50 | | | | |
| Σ | | 100.0 | | | | |

The resulting mixture is filled into the cell 1 via capillarity action.

Starting from the transparent planar state an electric field of 50 V and 60 Hz is applied to the test cell in order to switch the cell from planar state to the stable opaque focal conic state. Then an electric field of 40 V and 50 kHz is applied to the test cell to switch the cell from opaque focal conic state to stable planer state. The direct switching is achieved by applying square wave field at low (60Hz) and high (50 kHz) frequency.

In contrast to comparison example 2, working example 2 shows a significant improvement of the haze level even if comparative example 2 exhibits a higher value for $\Delta n$. In working example 2, a dual frequency ChLC mixture is utilized in order to demonstrate that a corresponding device can switch quickly to planar state and keep transparent state even in thicker cell (15um) and without alignment layer. Moreover, the planar state is highly transparent because the refractive index of polymer particle is close to $N_{mean}$ of the ChLC mixture and the reflecting wavelength of the ChLC mixture is out of the wavelength of the VIS light.

## Claims

1. Privacy window comprising a light modulation element comprising a pair of opposing transparent substrates, which are provided with an electrode structure on the inner surface of each substrate and a switching layer comprising a cholesteric liquid crystalline medium comprising one or more polymer particles in an amount of 0.1 % by weight to 5% by weight and one or more chiral compounds, wherein the one or more chiral compounds each alone or in combination with each other have an absolute value of the helical twisting power $|HTP_{total}|$ of 5 $\mu m^{-1}$ or more, wherein the refractive index of the polymer particles differs from the refractive index of the cholesteric liquid crystalline medium in a range from -0.25 to +0.25, wherein the cholesteric liquid crystalline medium is a dual frequency cholesteric liquid crystalline medium, and wherein the cholesteric liquid crystalline medium comprises one or more compounds of formulae B-I, one or more compounds of formula B-III, and optionally one or more compounds of formula B-II

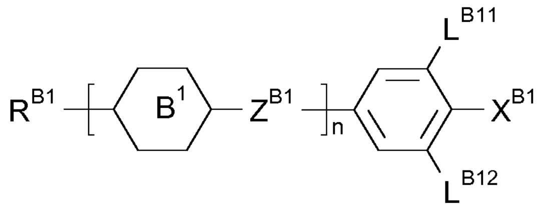

B-I

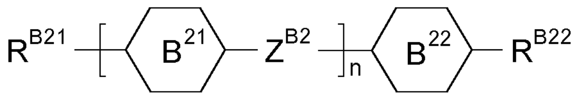

B-II

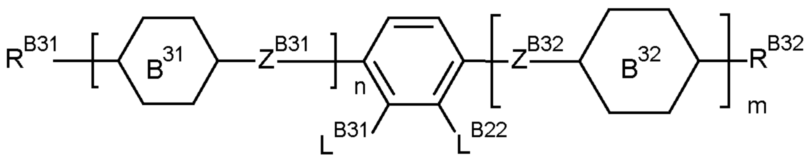

B-III

wherein

$L^{B11}$ to $L^{B31}$ are independently H or F, whereby $L^{B22}$ and $L^{B31}$ denote F if not at least one of

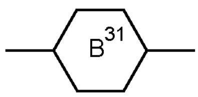

and

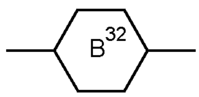

denotes

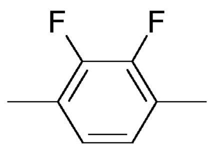

,

$R^{B1}$, $R^{B21}$ $R^{B22}$, $R^{B31}$ and $R^{B32}$ are each independently H, a straight-chain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, -N($CH_3$)-, -CO-, -COO-, -OCO-, - O-CO-O-, -S-CO-, -CO-S-, -CH=CH-, -CH=CF-, - CF=CF- or -C≡C- in such a manner that oxygen atoms are not linked directly to one another,

$X^{B1}$ is F, Cl, CN, NCS, $OCF_2H$, $OCF_3$, $CF_3$,

$Z^{B1}$, $Z^{B2}$, $Z^{B31}$ and $Z^{B32}$ are in each occurrence independently -$CH_2$-$CH_2$-, -CO-O-, -O-CO-, -$CF_2$-O-, -O- $CF_2$-, -CH=CH- , -C≡C- or a single bond,

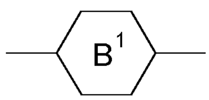

,

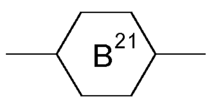

,

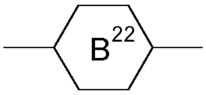

,

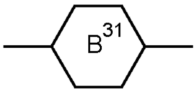 and 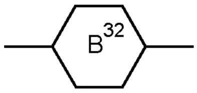

are in each occurrence independently

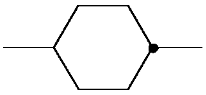 , 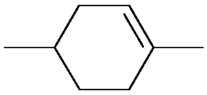

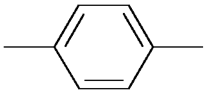

or

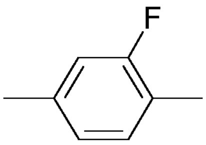

,

alternatively one or more of

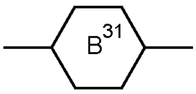 and 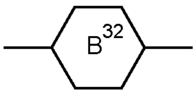

are

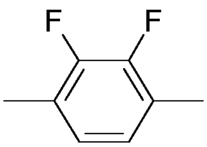

,

n is 1, 2 or 3, and
m is 0, 1 or 2.

**2.** Privacy window according to claim 1, **characterized in that** the cholesteric liquid crystalline medium comprises the one or more compounds of formulae B-I, B-II, and B-III in an amount from 50 to 98 %.

**3.** Privacy window according to claim 1 or 2, **characterized in that** the cholesteric liquid crystalline medium comprises the one or more chiral compounds in an amount from 1 to 20 %.

**4.** Privacy window according to one or more of claims 1 to 3, **characterized in that** the value of the cross-over frequency

of the cholesteric liquid crystalline medium is ≥ 15 kHz.

**5.** Method of production of the privacy window according to one or more of claims 1 to 4, comprising at least the following steps:

- cutting and cleaning of the substrates,
- providing the electrode structure on the substrates,
- optionally, coating of at least one alignment layer,
- assembling the cell using a UV curable adhesive,
- filling the cell with the cholesteric liquid crystalline medium comprising the one or more particles,
- optionally, curing the polymerisable compounds of the LC medium.

**Patentansprüche**

**1.** Sichtschutzfenster enthaltend ein Lichtmodulationselement enthaltend ein Paar einander gegenüberliegender transparenter Substrate, die auf der Innenfläche des jeweiligen Substrats mit einer Elektrodenstruktur versehen sind, und eine Schaltschicht enthaltend ein cholesterisches flüssigkristallines Medium enthaltend ein oder mehrere Polymerteilchen in einer Menge von 0,1 Gew.-% bis 5 Gew.-% und eine oder mehrere chirale Verbindungen, wobei die eine oder mehreren chiralen Verbindungen jeweils alleine oder in Kombination miteinander einen absoluten Wert für das helikale Verdrillungsvermögen $|HTP_{total}|$ von 5 $\mu m^{-1}$ oder mehr aufweisen, wobei sich der Brechungsindex der Polymerteilchen vom Brechungsindex des cholesterischen flüssigkristallinen Mediums in einem Bereich von -0,25 bis +0,25 unterscheidet, wobei es sich bei dem cholesterischen flüssigkristallinen Medium um ein cholesterisches flüssigkristallines Zweifrequenzmedium handelt und wobei das cholesterische flüssigkristalline Medium eine oder mehrere Verbindungen der Formel B-I, eine oder mehrere Verbindungen der Formel B-III und gegebenenfalls eine oder mehrere Verbindungen der Formel B-II

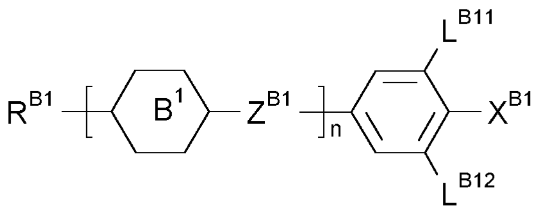

B-I

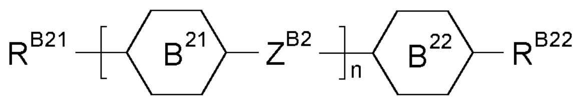

B-II

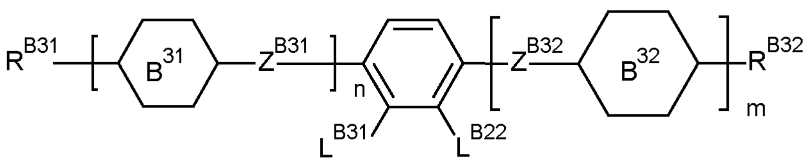

B-III

enthält, wobei

$L^{B11}$ bis $L^{B31}$ unabhängig H oder F sind, wobei $L^{B22}$ und $L^{B31}$ F bedeuten, wenn nicht mindestens einer von

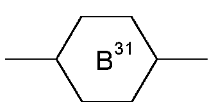

und

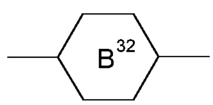

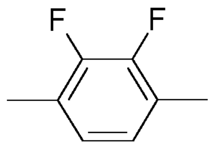

bedeutet,

$R^{B1}$, $R^{B21}$ $R^{B22}$, $R^{B31}$ und $R^{B32}$ jeweils unabhängig H, eine geradkettige oder verzweigte Alkylgruppe mit 1 bis 25 C-Atomen sind, die unsubstituiert oder ein- oder mehrfach durch Halogen oder CN substituiert sein kann, wobei auch eine oder mehrere nicht benachbarte $CH_2$-Gruppen bei jedem Auftreten unabhängig voneinander so durch -O-, -S-, -NH-, -N($CH_3$)-, -CO-, -COO-, -OCO-, -O-CO-O-, -S-CO-, -CO-S-, -CH=CH-, -CH=CF-, -CF=CF- oder -C=C- ersetzt sein können, dass Sauerstoffatome nicht direkt miteinander verknüpft sind,

$X^{B1}$ F, Cl, CN, NCS, $OCF_2H$, $OCF_3$, $CF_3$ ist,

$Z^{B1}$, $Z^{B2}$, $Z^{B31}$ und $Z^{B32}$ bei jedem Auftreten unabhängig -$CH_2$-$CH_2$-, -CO-O-, -O-CO-, -$CF_2$-O-, -O-$CF_2$-, -CH=CH-, -C≡C- oder eine Einfachbindung sind,

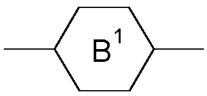

,

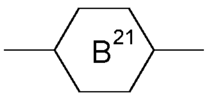

,

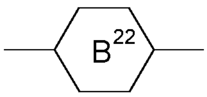

,

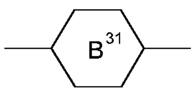 und 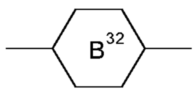

bei jedem Auftreten unabhängig

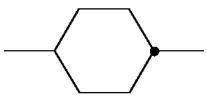

,

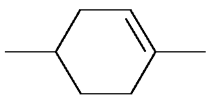

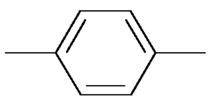

oder

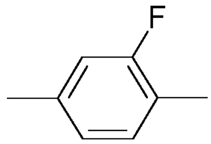

sind, alternativ einer oder mehrere von

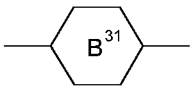 und 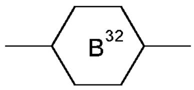 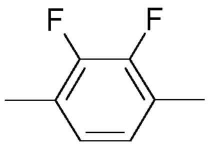

sind,
n 1, 2 oder 3 ist und
m 0, 1 oder 2 ist.

2. Sichtschutzfenster nach Anspruch 1, **dadurch gekennzeichnet, dass** das cholesterische flüssigkristalline Medium die eine oder mehreren Verbindungen der Formeln B-I, B-II und B-III in einer Menge von 50 bis 98 % enthält.

3. Sichtschutzfenster nach Anspruch 1 oder 2, **dadurch gekennzeichnet, dass** das cholesterische flüssigkristalline Medium die eine oder mehreren chiralen Verbindungen in einer Menge von 1 bis 20 % enthält.

4. Sichtschutzfenster nach einem oder mehreren der Ansprüche 1 bis 3, **dadurch gekennzeichnet, dass** der Wert der Übergangsfrequenz des cholesterischen flüssigkristallinen Mediums $\geq$ 15 kHz ist.

5. Verfahren zur Herstellung des Sichtschutzfensters nach einem oder mehreren der Ansprüche 1 bis 4, umfassend zumindest die folgenden Schritte:

- Schneiden und Reinigen der Substrate,
- Bereitstellen der Elektrodenstruktur auf den Substraten,
- gegebenenfalls Auftragen mindestens einer Orientierungsschicht,
- Zusammensetzen der Zelle mit einem UV-härtbaren Klebstoff,
- Füllen der Zelle mit dem cholesterischen flüssigkristallinen Medium, welches das eine oder die mehreren Teilchen enthält,
- gegebenenfalls Härten der polymerisierbaren Verbindungen des FK-Mediums.

## Revendications

1. Fenêtre de confidentialité comprenant un élément de modulation de la lumière qui comprend une paire de substrats transparents opposés, lesquels comportent une structure d'électrodes sur la surface interne de chaque substrat et une couche de commutation qui comprend un milieu cristallin liquide cholestérique qui comprend une ou plusieurs particule(s) de polymère selon une quantité de 0,1 % en poids à 5 % en poids et un ou plusieurs composé(s) chiral/chiraux, dans laquelle les un ou plusieurs composés chiraux, chacun seul ou en combinaison les uns avec les autres, présentent une valeur absolue de la puissance de torsion hélicoïdale $|HTP_{total}|$ de 5 $\mu m^{-1}$ ou plus, dans laquelle l'indice de réfraction des particules de polymère diffère de l'indice de réfraction du milieu cristallin liquide cholestérique dans une plage qui va de -0,25 à +0,25, dans laquelle le milieu cristallin liquide cholestérique est un milieu cristallin liquide cholestérique à fréquence double, et dans laquelle le milieu cristallin liquide cholestérique comprend un ou plusieurs composé(s) de la formule B-I, un ou plusieurs composé(s) de la formule B-III, et en option un ou plusieurs composé(s) de la formule B-II

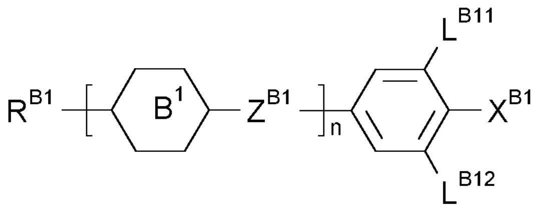

B-I

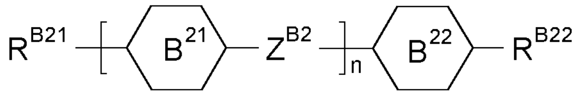

B-II

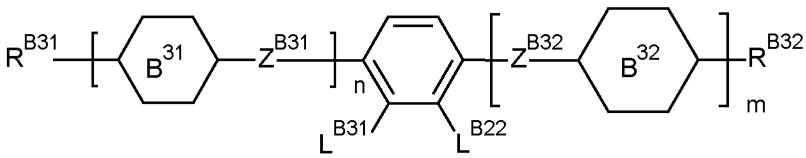

B-III

dans lesquelles

$L^{B11}$ à $L^{B31}$ sont, de manière indépendante, H ou F, d'où il résulte que $L^{B22}$ et $L^{B31}$ représentent F si au moins l'un de

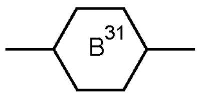 et 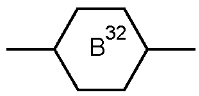

ne représente pas

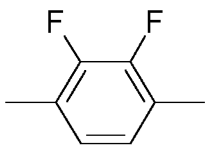

,

$R^{B1}$, $R^{B21}$ $R^{B22}$, $R^{B31}$ et $R^{B32}$ sont chacun, de manière indépendante, H, un groupe alkyle en chaîne droite ou ramifié qui comporte de 1 à 25 atome(s) de C, lequel peut être non substitué, mono- ou polysubstitué par halogène ou par CN, étant entendu qu'il est également possible qu'un ou que plusieurs groupe(s) $CH_2$ non adjacents soi(en)t remplacé(s), pour chaque occurrence de manière indépendante les unes des autres, par -O-, -S-, -NH-, -N($CH_3$)-, -CO-, -COO-, -OCO-, -O-CO-O-, -S-CO-, -CO-S-, -CH=CH-, -CH=CF-, -CF=CF- ou -C≡C- de telle sorte que des atomes d'oxygène ne soient pas liés directement les uns aux autres,

$X^{B1}$ est F, Cl, CN, NCS, $OCF_2H$, $OCF_3$, $CF_3$,

$Z^{B1}$, $Z^{B2}$, $Z^{B31}$ et $Z^{B32}$ sont pour chaque occurrence de manière indépendante -$CH_2$-$CH_2$-, -CO-O-, -O-CO-, -$CF_2$-O-, -O- $CF_2$-, -CH=CH- , -C≡C- ou une liaison simple,

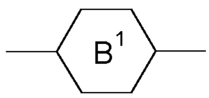

,

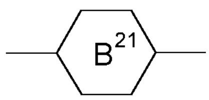

,

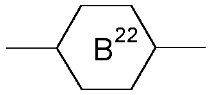

,

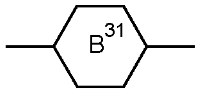 et 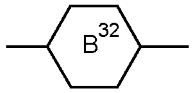

sont pour chaque occurrence de manière indépendante

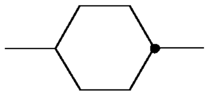 , 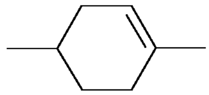

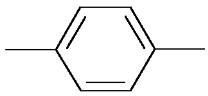 ou 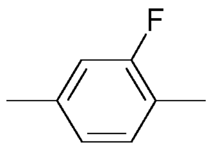 ,

à titre d'alternative, un ou plusieurs de

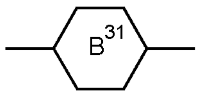 et 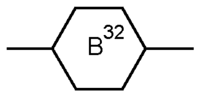

est/sont

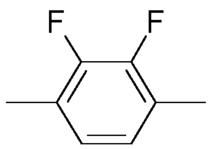

,

n est 1, 2 ou 3, et
m est 0, 1 ou 2.

**2.** Fenêtre de confidentialité selon la revendication 1, **caractérisée en ce que** le milieu cristallin liquide cholestérique comprend les uns ou plusieurs composés des formules B-I, B-II, et B-III selon une quantité qui va de 50 % à 98 %.

**3.** Fenêtre de confidentialité selon la revendication 1 ou 2, **caractérisée en ce que** le milieu cristallin liquide cholestérique comprend les un ou plusieurs composés chiraux selon une quantité qui va de 1 % à 20 %.

**4.** Fenêtre de confidentialité selon une ou plusieurs des revendications 1 à 3, **caractérisée en ce que** la valeur de la fréquence de transition du milieu cristallin liquide cholestérique est ≥ 15 kHz.

**5.** Procédé de fabrication de la fenêtre de confidentialité selon une ou plusieurs des revendications 1 à 4, comprenant au moins les étapes qui suivent :

- la découpe et le nettoyage des substrats,
- la formation de la structure d'électrodes sur les substrats,
- en option, le dépôt d'au moins une couche d'alignement,

- l'assemblage de la cellule en utilisant un adhésif durcissable aux UV,
- le remplissage de la cellule avec le milieu cristallin liquide cholestérique qui comprend les une ou plusieurs particules,
- en option, le durcissement des composés polymérisables du milieu LC.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100045924 A
- WO 9800428 A
- GB 2328207 A
- US 7223450 B
- WO 9322397 A
- EP 0261712 A
- DE 19504224
- WO 9522586 A
- WO 9700600 A
- US 5518652 A
- US 5750051 A
- US 5770107 A
- US 6514578 B
- US 7060200 B1
- US 20060172090 A1
- US 6989190 A1
- WO 2014169984 A1


### Non-patent literature cited in the description


- **J. MA ; L. SHI ; D.-K. YANG.** Bistable polymer stabilized cholesteric texture light shutter. *Appl. Phys. Express,* 2010, vol. 3 (2), 021702
- **Y.-C. HSIAO ; C.-Y. TANG ; W. LEE.** Fast-switching bistable cholesteric intensity modulator. *Opt. Express,* 2011, vol. 19 (10), 9744-9749
- *Pure Appl. Chem.,* 2001, vol. 73 (5), 888
- **C. TSCHIERSKE ; G. PELZL ; S. DIELE.** *Angew. Chem.,* 2004, vol. 116, 6340-6368
- Merck Liquid Crystals, Physical Properties of Liquid Crystals. Merck KGaA, November 1997